# EUROPEAN PATENT APPLICATION

(11) **EP 4 604 539 A1**
(43) Date of publication of application: **20.08.2025**
(21) Application number: 23877551.4
(22) Date of filing: 22.09.2023
(51) Int. Cl.: H04N 19/60, H04N 19/13, H04N 19/124, H04N 19/119, H04N 19/176, G06T 9/00, G06N 3/045, G06N 3/08

(54) **AI-BASED IMAGE ENCODING DEVICE AND IMAGE DECODING DEVICE, AND IMAGE ENCODING AND DECODING METHOD BY SAME**

(30) Priority: 12.10.2022 KR 20220130879; 07.12.2022 KR 20220170054
(71) Applicant: Samsung Electronics Co., Ltd., Suwon-si, Gyeonggi-do 16677 (KR)
(72) Inventor: DINH, Quockhanh, Suwon-si, Gyeonggi-do 16677 (KR); KIM, Kyungah, Suwon-si, Gyeonggi-do 16677 (KR); PARK, Minsoo, Suwon-si, Gyeonggi-do 16677 (KR); PARK, Minwoo, Suwon-si, Gyeonggi-do 16677 (KR); CHOI, Kwangpyo, Suwon-si, Gyeonggi-do 16677 (KR); PIAO, Yinji, Suwon-si, Gyeonggi-do 16677 (KR)
(74) Representative: Appleyard Lees IP LLP
(86) International application number: PCT/KR2023/014500
(87) International publication number: WO 2024/080623

(57) **Abstract**

An artificial intelligence (AI)-based image decoding method and an apparatus performing the AI-based image decoding method are provided. According to the AI-based image decoding method, a transform block for a residual block of a current block is obtained from a bitstream, a transform kernel for the transform block is generated by applying, to a neural network, a prediction block for the current block, neighboring pixels of the current block, and coding context information, the residual block is obtained by applying the generated transform kernel to the transform block, and the current block is reconstructed by using the residual block and the prediction block.

## Description

### TECHNICAL FIELD

The disclosure relates to encoding and decoding an image. More particularly, the disclosure relates to a technology for encoding and decoding an image by using artificial intelligence (AI), for example, a neural network.

### BACKGROUND ART

In Codec, such as H.264 advanced video decoding (AVC) or high efficiency video coding (HEVC), an image is split into blocks, a transform block is obtained by predicting each block and transforming the same into a residual block that is a difference between an original block and a prediction block, and the transform block is quantized and entropy-encoded to be transmitted as a bitstream.

The transform block obtained by performing entropy decoding and inverse-quantization on the transmitted bitstream is inverse-transformed to obtain the residual block, and the block may be reconstructed by using the residual block and the prediction block obtained through prediction.

Recently, technologies of encoding/decoding an image by using artificial intelligence (AI) are being proposed, and a method of effectively encoding/decoding an image by performing transform and inverse-transform by using AI, for example, a neural network, is required.

### DESCRIPTION OF EMBODIMENTS

### SOLUTION TO PROBLEM

An artificial intelligence (AI)-based image decoding method according to an embodiment of the disclosure may include obtaining a transform block for a residual block of a current block, from a bitstream, generating a transform kernel for the transform block by applying, to a neural network, a prediction block for the current block, neighboring pixels of the current block, and coding context information, obtaining the residual block by applying the generated transform kernel to the transform block, and reconstructing the current block by using the residual block and the prediction block.

An AI-based image decoding apparatus according to an embodiment of the disclosure may include a memory storing one or more instructions, and at least one processor configured to operate according to the one or more instructions. The at least one processor may be configured to obtain a transform block for a residual block of a current block, from a bitstream. The at least one processor may be configured to generate a transform kernel for the transform block by applying, to a neural network, a prediction block for the current block, neighboring pixels of the current block, and coding context information. The at least one processor may be configured to obtain the residual block by applying the generated transform kernel to the transform block. The at least one processor may be configured to reconstruct the current block by using the residual block and the prediction block.

An AI-based image encoding method according to an embodiment of the disclosure may include obtaining a residual block, based on a prediction block of a current block and an original block of the current block, generating a transform kernel for a transform block of the residual block by applying, to a neural network, the prediction block, neighboring pixels of the current block, and coding context information, obtaining the transform block by applying the generated transform kernel to the residual block, and generating a bitstream including the transform block.

An AI-based image encoding apparatus according to an embodiment of the disclosure may include a memory storing one or more instructions, and at least one processor configured to operate according to the one or more instructions. The at least one processor may be configured to obtain a residual block, based on a prediction block of a current block and an original block of the current block. The at least one processor may be configured to generate a transform kernel for a transform block of the residual block by applying, to a neural network, the prediction block, neighboring pixels of the current block, and coding context information. The at least one processor may be configured to obtain the transform block by applying the generated transform kernel to the residual block. The at least one processor may be configured to generate a bitstream including the transform block.

An AI-based image decoding method according to an embodiment of the disclosure may include obtaining a transform feature map corresponding to a transform block for a residual block of a current block, from a bitstream, generating a coding context feature map for the transform block by applying, to a first neural network, a prediction block for the current block, neighboring pixels of the current block, and coding context information, and reconstructing the current block by applying, to a second neural network, the transform feature map and the coding context feature map.

An AI-based image decoding apparatus according to an embodiment of the disclosure may include a memory storing one or more instructions, and at least one processor configured to operate according to the one or more instructions. The at least one processor may be configured to obtain a transform feature map corresponding to a transform block for a residual block of a current block, from a bitstream. The at least one processor may be configured to generate a coding context feature map for the transform block by applying, to a first neural network, a prediction block for the current block, neighboring pixels of the current block, and coding context information. The at least one processor may be configured to reconstruct the current block by applying, to a second neural network, the transform feature map and the coding context feature map.

An AI-based image encoding method according to an embodiment of the disclosure may include obtaining a residual block, based on a prediction block of a current block and an original block of the current block, generating a coding context feature map for a transform block by applying, to a first neural network, the prediction block, neighboring pixels of the current block, and coding context information, obtaining a transform feature map corresponding to the transform block by applying, to a second neural network, the coding context feature map and the residual block, and generating a bitstream including the transform feature map.

An AI-based image encoding apparatus according to an embodiment of the disclosure may include a memory storing one or more instructions, and at least one processor configured to operate according to the one or more instructions. The at least one processor may be configured to obtain a residual block, based on a prediction block of a current block and an original block of the current block. The at least one processor may be configured to generate a coding context feature map for a transform block by applying, to a first neural network, the prediction block, neighboring pixels of the current block, and coding context information. The at least one processor may be configured to obtain a transform feature map corresponding to the transform block by applying, to a second neural network, the coding context feature map and the residual block. The at least one processor may be configured to generate a bitstream including the transform feature map.

### BRIEF DESCRIPTION OF DRAWINGS

FIG. 1 is a diagram showing image encoding and decoding processes.
FIG. 2 is a diagram showing blocks obtained by splitting an image according to a tree structure.
FIG. 3 is a diagram for describing artificial intelligence (AI)-based image encoding and decoding processes according to an embodiment of the disclosure.
FIG. 4 is a diagram for describing AI-based image encoding and decoding processes according to an embodiment of the disclosure.
FIG. 5 is a diagram for describing AI-based image encoding and decoding processes according to an embodiment of the disclosure.
FIG. 6 is a diagram for describing AI-based image encoding and decoding processes according to an embodiment of the disclosure.
FIG. 7 is a diagram for describing AI-based image encoding and decoding processes according to an embodiment of the disclosure.
FIG. 8 is a diagram for describing AI-based image encoding and decoding processes according to an embodiment of the disclosure.
FIG. 9 is a flowchart of an AI-based image encoding method according to an embodiment of the disclosure.
FIG. 10 is a diagram of a configuration of an AI-based image encoding apparatus, according to an embodiment of the disclosure.
FIG. 11 is a flowchart of an AI-based image decoding method according to an embodiment of the disclosure.
FIG. 12 is a diagram of a configuration of an AI-based image decoding apparatus, according to an embodiment of the disclosure.
FIG. 13 is a flowchart of an AI-based image encoding method according to an embodiment of the disclosure.
FIG. 14 is a diagram of a configuration of an AI-based image encoding apparatus, according to an embodiment of the disclosure.
FIG. 15 is a flowchart of an AI-based image decoding method according to an embodiment of the disclosure.
FIG. 16 is a diagram of a configuration of an AI-based image decoding apparatus, according to an embodiment of the disclosure.
FIG. 17 is a diagram for describing a method of training neural networks used in an AI-based image encoding method and an AI-based image decoding method, according to an embodiment of the disclosure.
FIG. 18 is a diagram for describing a method of training neural networks used in an AI-based image encoding method and an AI-based image decoding method, according to an embodiment of the disclosure.

### MODE OF DISCLOSURE

Throughout the disclosure, the expression "at least one of a, b or c" indicates only a, only b, only c, both a and b, both a and c, both b and c, all of a, b, and c, or variations thereof.

As the disclosure allows for various changes and numerous examples, particular embodiments of the disclosure will be illustrated in the drawings and described in detail in the written description. However, this is not intended to limit an embodiment of the disclosure to particular modes of practice, and it will be understood that all changes, equivalents, and substitutes that do not depart from the spirit and technical scope of the disclosure are encompassed in the embodiments of the disclosure.

In the description of an embodiment of the disclosure, certain detailed explanations of related art are omitted when it is deemed that they may unnecessarily obscure the essence of the disclosure. Also, numbers (for example, a first, a second, and the like) used in the description of the specification are merely identifier codes for distinguishing one element from another.

Also, in the disclosure, it will be understood that when elements are "connected" or "coupled" to each other, the elements may be directly connected or coupled to each other, but may alternatively be connected or coupled to each other with an intervening element therebetween, unless specified otherwise.

In the disclosure, regarding an element represented as a "-er (or)", "unit", or a "module", two or more elements may be combined into one element or one element may be divided into two or more elements according to subdivided functions. In addition, each element described hereinafter may additionally perform some or all of functions performed by another element, in addition to main functions of itself, and some of the main functions of each element may be performed entirely by another component.

In the disclosure, an "image" or "picture" may denote a still image (or a frame), a moving image including a plurality of consecutive still images, or a video.

In the disclosure, a "neural network" is a representative example of an artificial neural network model simulating brain nerves, and is not limited to an artificial neural network model using a specific algorithm. The neural network may also be referred to as a deep neural network.

In the disclosure, a "parameter" is a value used in an operation process of each layer forming a neural network, and for example, may be used when an input value is applied to a certain operation expression. The parameter is a value set as a result of training, and may be updated through separate training data when necessary.

In the disclosure, a "sample" is data assigned to a sampling location in 1-dimensional (1D) or 2-dimensional (2D) data, such as an image, a block, or feature data, and denotes data to be processed. For example, a sample may include a pixel in a 2D image. The 2D data may be referred to as a "map".

Also, in the disclosure, a "current block" denotes a block to be currently processed. The current block may be a slice, a tile, a maximum coding unit, a coding unit, a prediction unit, or a transform unit, which is obtained by splitting a current image.

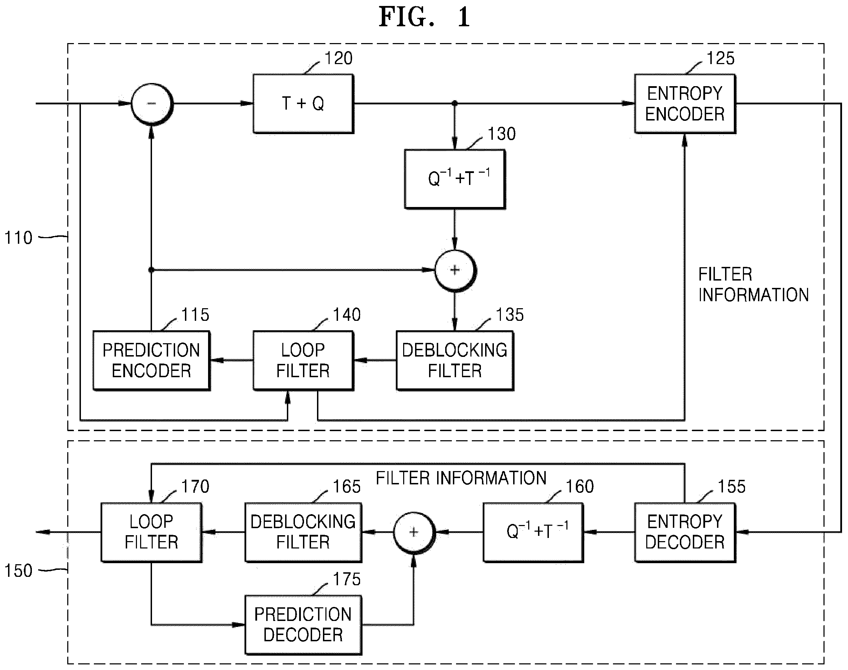

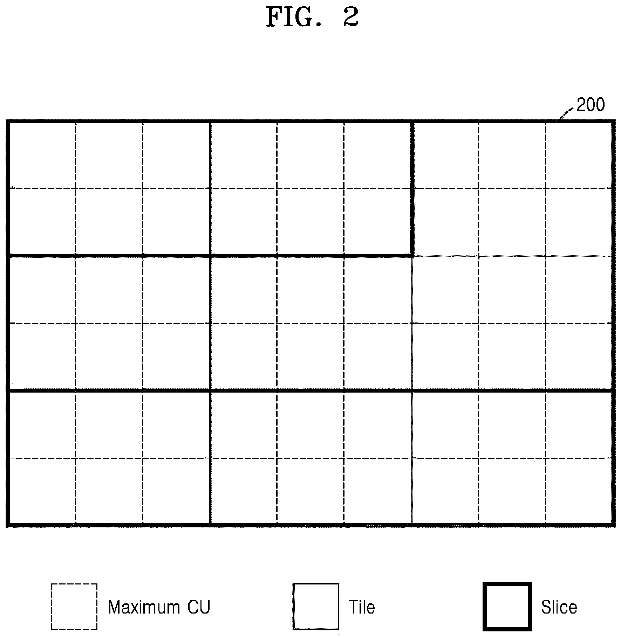

Before describing an image decoding method, an image decoding apparatus, an image encoding method, and an image encoding apparatus, according to an embodiment of the disclosure, image encoding and decoding processes will be described with reference to FIGS. 1 and 2.

FIG. 1 is a diagram showing the image encoding and decoding processes.

An encoding apparatus 110 transmits a bitstream generated by encoding an image to a decoding apparatus 150, and the decoding apparatus 150 reconstructs the image by receiving and decoding the bitstream.

In detail, in the encoding apparatus 110, a prediction encoder 115 outputs a prediction block through inter-prediction and intra-prediction, and a transformer and quantizer 120 outputs a quantized transform coefficient by transforming and quantizing residual samples of a residual block between the prediction block and a current block. An entropy encoder 125 encodes the quantized transform coefficient and outputs the same as the bitstream.

The quantized transform coefficient is reconstructed into the residual block including the residual samples of a spatial domain through an inverse-quantizer and inverse-transformer 130. A reconstructed block in which the prediction block and the residual block are combined is output as a filtered block through a deblocking filter 135 and a loop filter 140. A reconstructed image including the filtered block may be used as a reference image for a next input image in the prediction encoder 115.

The bitstream received by the decoding apparatus 150 is reconstructed into the residual block including the residual samples of the spatial domain through an entropy decoder 155 and an inverse-quantizer and inverse-transformer 160. The residual block is generated as the residual block and prediction block output from a prediction decoder 175 are combined, and the residual block is output as the filtered block through a deblocking filter 165 and a loop filter 170. The reconstructed image including the filtered block may be used as a reference image for a next image in the prediction decoder 175.

The loop filter 140 of the encoding apparatus 110 performs loop filtering by using filter information input according to a user input or system setting. The filter information used by the loop filter 140 is transmitted to the decoding apparatus 150 through the entropy encoder 125. The loop filter 170 of the decoding apparatus 150 may perform loop filtering based on the filter information input from the entropy decoder 155.

In the image encoding and decoding processes, an image is hierarchically split, and encoding and decoding are performed on blocks obtained by splitting the image. The blocks obtained by splitting the image will be described with reference to FIG. 2.

FIG. 2 is a diagram showing blocks obtained by splitting an image according to a tree structure.

One image 200 may be split into one or more slices or one or more tiles. One slice may include a plurality of tiles.

One slice or one tile may be a sequence of one or more maximum coding units (CU).

One maximum CU may be split into one or more CUs. A CU may be a reference block for determining a prediction mode. In other words, it may be determined whether an intra-prediction mode or an inter-prediction mode is applied to each CU. In the disclosure, a maximum CU may be referred to as a maximum coding block and a CU may be referred to as a coding block.

A size of a CU may be equal to or smaller than that of a maximum CU. A maximum CU is a CU having a maximum size, and thus may be referred to as a CU.

One or more prediction units for intra-prediction or inter-prediction may be determined from a CU. A size of a prediction unit may be equal to or smaller than that of a CU.

Also, one or more transform units for transform and quantization may be determined from a CU. A size of a transform unit may be equal to or smaller than that of a CU. A transform unit is a reference block for transform and quantization, and residual samples of a CU may be transformed and quantized for each transform unit in the CU.

In the disclosure, a current block may be a slice, a tile, a maximum CU, a CU, a prediction unit, or a transform unit, which is obtained by splitting the image 200. Also, a lower block of a current block is a block obtained by splitting the current block, and for example, when the current block is a maximum CU, the lower block may be a CU, a prediction unit, or a transform unit. Also, an upper block of a current block is a block including the current block as a portion, and for example, when the current block is a maximum CU, the upper block may be a picture sequence, a picture, a slice, or a tile.

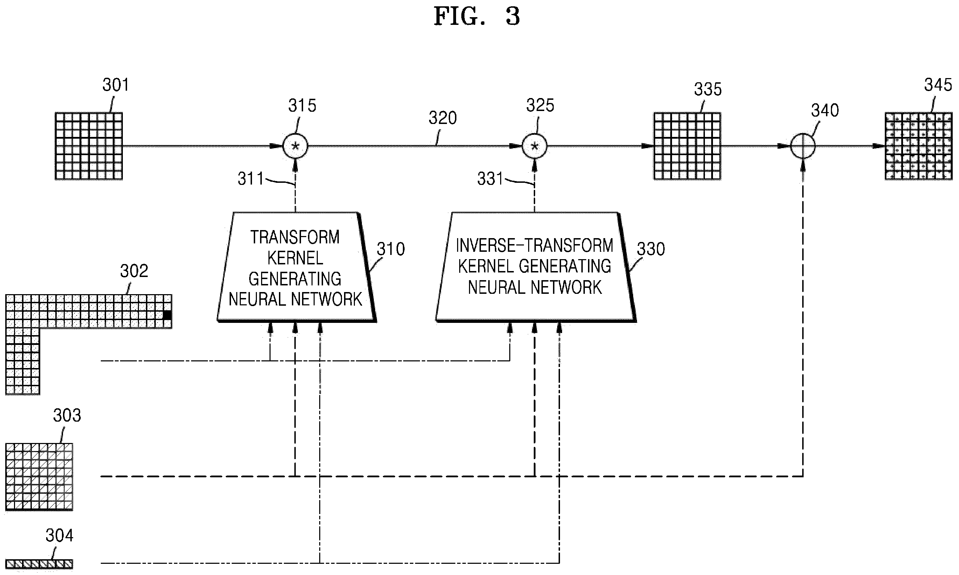

Hereinafter, an artificial intelligence (AI)-based video decoding method, an AI-based video decoding apparatus, an AI-based video encoding method, and an AI-based video encoding apparatus, according to an embodiment of the disclosure, will be described with reference to FIGS. 3 through 18.

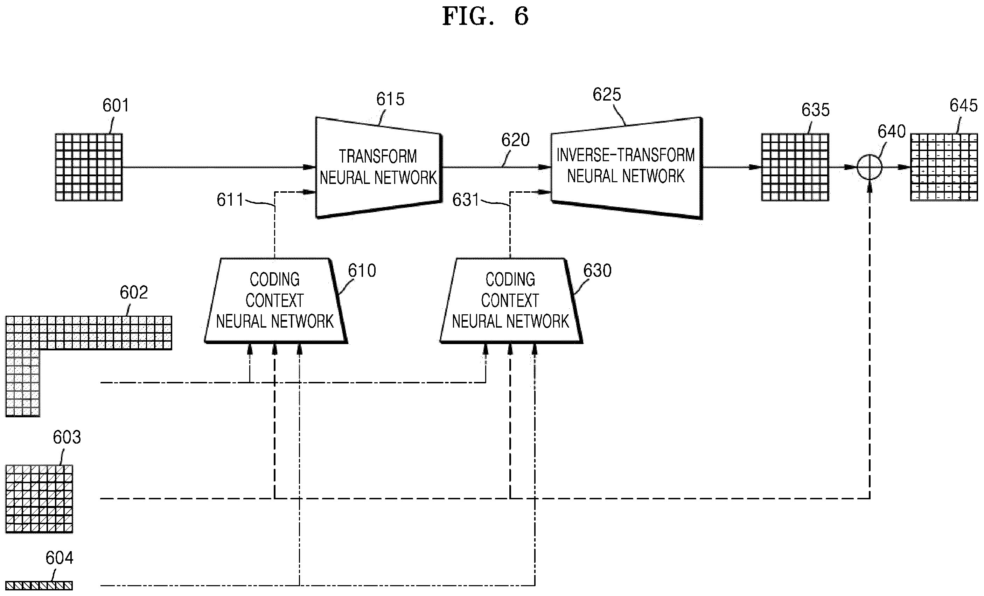

FIGS. 3 through 5 relate to linear transform using a transform kernel trained through a neural network, and FIGS. 6 through 8 relate to non-linear transform outputting a result obtained by performing transform and inverse-transform through a neural network.

FIG. 3 is a diagram for describing AI-based image encoding and decoding processes according to an embodiment of the disclosure.

Referring to FIG. 3, transform 315 is applied to a residual block 301 of a current block. The residual block 301 represents a difference between an original block of the current block and a prediction block 303 of the current block. The prediction block 303 may be obtained through intra prediction and/or inter prediction. The transform 315 is performed on the residual block 301 as part of the encoding process. A transform kernel generating neural network 310 is used to obtain a transform kernel for performing the transform 315 on the residual block 301. Neighboring pixels 302 of the current block, i.e., reference pixels, the prediction block 303 of the current block, and coding context information 304 are input to the transform kernel generating neural network 310, and a transform kernel 311 is output from the transform kernel generating neural network 310. A transform block 320 of the residual block 301 is obtained by performing matrix multiplication on the residual block 301 and the transform kernel 311. The transform block 320 is quantized and entropy-encoded, and transmitted to a decoding side as a bitstream.

During the decoding process, the transform block 320 obtained from the bitstream is entropy-decoded and inverse-quantized, and then inverse-transform 325 is performed thereon. An inverse-transform kernel generating neural network 330 is used to obtain an inverse-transform kernel for the inverse-transform 325. The neighboring pixels 302 of the current block, i.e., the reference pixels, the prediction block 303 of the current block, and the coding context information 304 are input to the inverse-transform kernel generating neural network 330, and an inverse-transform kernel 331 is output from the inverse-transform kernel generating neural network 330. A residual block 335 is obtained by performing matrix multiplication on the inverse-quantized residual block and the inverse-transform kernel 331. A reconstructed block 345 of the current block is obtained by performing addition 340 on the residual block 335 and the prediction block 303.

Through the AI-based image encoding and decoding processes of FIG. 3, a transform kernel directly trained through a neural network by using neighboring pixels, a prediction block, and coding context information may be used instead of fixed kernels (for example, a discrete cosine transform (DCT) type or a discrete sine transform (DST) type) of the Codec standard of the related art, which is not suitable to various blocks, being used for transform.

The transform kernel generating neural network 310 and the inverse-transform kernel generating neural network 330 may be referred to as a forward kernel generation network and a backward kernel generation network, respectively. The transform 315 and the inverse-transform 325 may be referred to as a forward transform and a backward transform, respectively. The combination of the transform kernel generating neural network 310 and the inverse-transform kernel generating neural network 330 may adaptively learn convolutional kernels specific to a given task, rather than providing fixed and predetermined convolutional kernels. Additionally, the forward kernel generation network and the backward kernel generation network may be implemented using convolutional neural networks, recurrent neural networks, or any other types of neural network structures.

Also, by being trained using the neural network, the transform kernel may be trained such that a cost between accuracy and a bitrate is well balanced, wherein cost accuracy may guarantee accuracy of a reconstructed block.

Coding context information used in FIGS. 3 through 8 may include a quantization parameter of a current block, a split tree structure of the current block, a split structure of neighboring pixels, a split type of the current block, and a split type of the neighboring pixels.

Also, the coding context information may include context about how strong a degree of compression is to balance a bitrate and quality, and context about a current coding state to provide statistical information of a residual block.

One dense kernel may be used as a transform kernel and an inverse-transform kernel for efficient transform in terms of rate-distortion.

In detail, at an encoding side, when a size of the residual block 301 is MxN, the transform kernel 311 output from the transform kernel generating neural network 310 by inputting the neighboring pixels 302 of the current block, the prediction block 303 of the current block, and the coding context information 304 thereto is MNxMN. The residual block 301 may be transformed into the form of a vector and rearranged in the form of MNx1 for the matrix multiplication of the transform kernel 311 and residual block 301. The transform kernel 311 of MNxMN and the residual block 301 of MNx1 outputs the transform block 320 in the form of a vector including transform coefficients of MNx1 through M²N² multiplication. The transform block 320 is quantized and entropy-encoded, and transmitted to the decoding side as the bitstream. At the decoding side, the transform block 320 obtained from the bitstream is entropy-decoded and inverse-quantized. The inverse-transform kernel 331 output from the inverse-transform kernel generating neural network 330 by inputting the neighboring pixels 302 of the current block, the prediction block 303 of the current block, and the coding context information 304 thereto is MNxMN. The residual block 335 on which the inverse-transform 325 of MNx1 is performed is obtained through M²N² multiplication on the inverse-transform kernel 331 of MNxMN and the transform block 320 in the form of a vector including the transform coefficients of MNx1. The residual block 335 of MNx1 is rearranged back to the form of a block of MxN. The reconstructed block 345 of the current block of MxN is obtained by performing addition 340 on the residual block 335 of MxN and the prediction block 303 of MxN.

Also, a separable transform kernel (for example, a Kronecker kernel) may be used as a transform kernel and an inverse-transform kernel for efficient transform in terms of calculation.

In detail, at the encoding side, when the size of the residual block 301 is MxN, the transform kernel 311 output from the transform kernel generating neural network 310 by inputting the neighboring pixels 302 of the current block, the prediction block 303 of the current block, and the coding context information 304 thereto includes two transform kernels, i.e., a left transform kernel of MxM and a right transform kernel of NxN. For transform, matrix multiplication is performed on the left transform kernel of MxM, the residual block 301 of MxN, and the right transform kernel of NxN. In this case, unlike a case where one transform kernel is used, M² multiplication and N² multiplication are performed instead of M²N² multiplication, and thus a scale of multiplication is relatively small. Accordingly, a case where two transform kernels are used is efficient in terms of calculation. Through the matrix multiplication, the transform block 320 of MxN is obtained. The transform block 320 is quantized and entropy-encoded, and transmitted to the decoding side as the bitstream. At the decoding side, the transform block 320 obtained from the bitstream is entropy-decoded and inverse-quantized. The inverse-transform kernel 331 output from the inverse-transform kernel generating neural network 330 by inputting the neighboring pixels 302 of the current block, the prediction block 303 of the current block, and the coding context information 304 thereto includes two inverse-transform kernels, i.e., a left inverse-transform kernel of MxM and a right inverse-transform kernel of NxN. For inverse-transform, matrix multiplication is performed on the left inverse-transform kernel of MxM, the transform block 320of MxN, and the right inverse-transform kernel of NxN. Through the matrix multiplication, the residual block 335 of MxN on which the inverse-transform 325 is performed is obtained. The reconstructed block 345 of the current block of MxN is obtained by performing addition 340 on the residual block 335 of MxN and the prediction block 303 of MxN.

Also, one transform kernel may be used at the encoding side and two separable transform kernels may be used at the decoding side.

Alternatively, two separable transform kernels may be used at the encoding side and one transform kernel may be used at the decoding side.

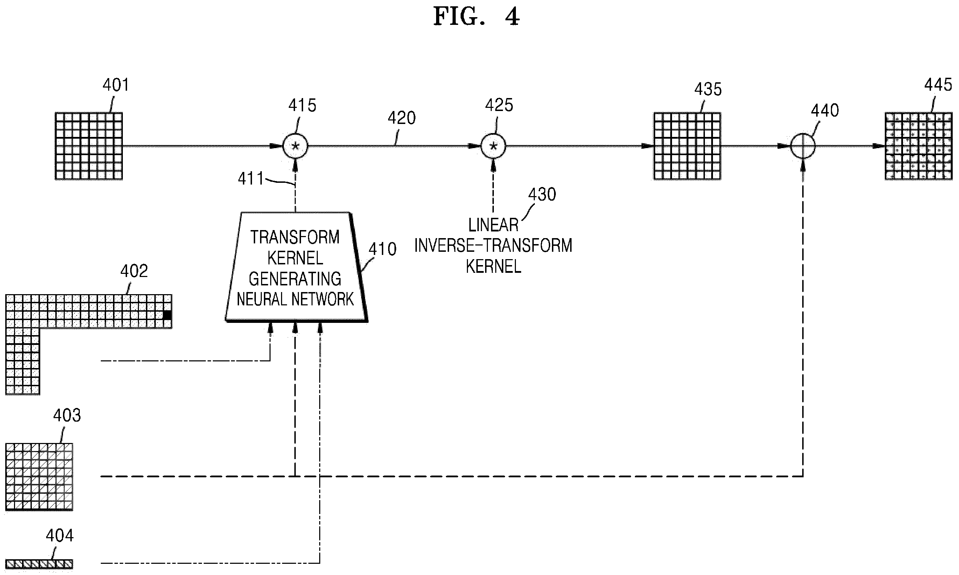

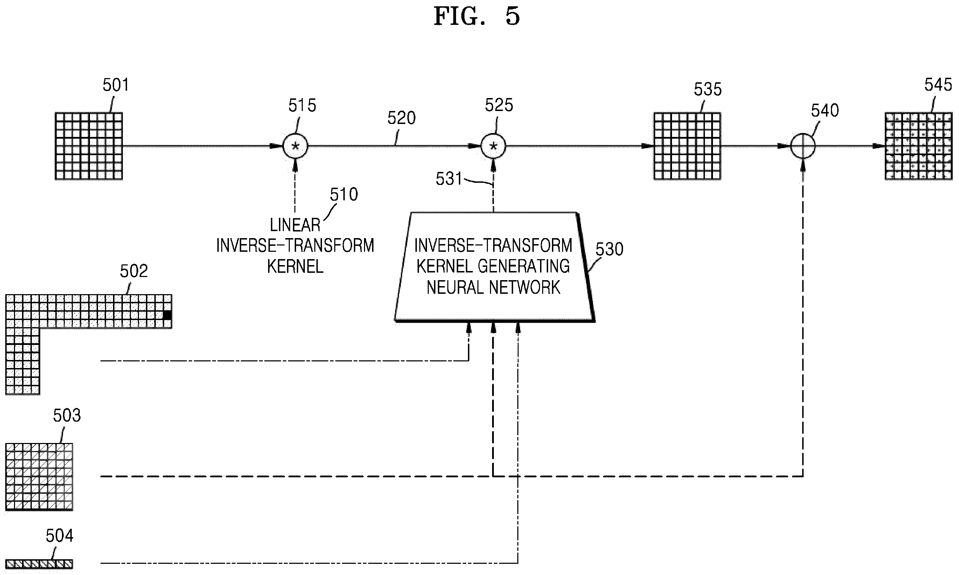

Calculation methods according to sizes of blocks, which are described with reference to FIG. 3, may be identically applied to FIGS. 4 and 5 described below.

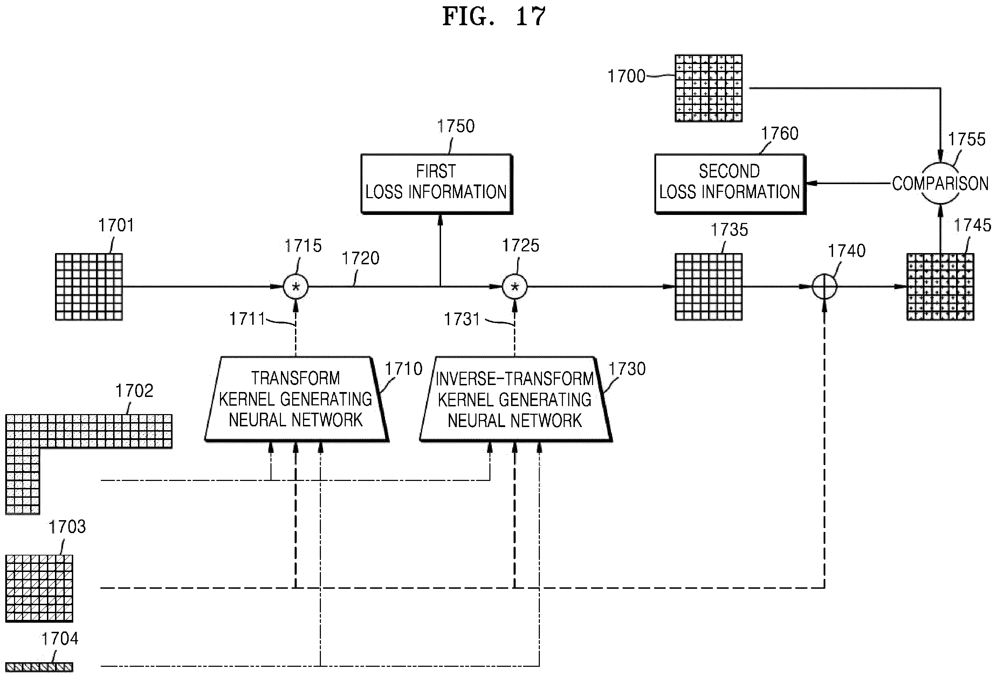

A method of training neural networks used in FIG. 3 will be described below with reference to FIG. 17.

A method of using a transform kernel trained through a neural network and one of a plurality of fixed transform kernels used in the standard of the related art together will be described with reference to FIGS. 4 and 5.

FIG. 4 is a diagram for describing AI-based image encoding and decoding processes according to an embodiment of the disclosure.

Referring to FIG. 4, transform 415 is applied to a residual block 401 of a current block. The residual block 401 represents a difference between an original block of the current block and a prediction block 403 of the current block. The transform 415 is performed on the residual block 401 as part of the encoding process. A transform kernel generating neural network 410 is used to obtain a transform kernel for the transform 415 of the residual block 401. Neighboring pixels 402 of the current block, i.e., reference pixels, the prediction block 403 of the current block, and coding context information 404 are input to the transform kernel generating neural network 410, and a transform kernel 411 is output from the transform kernel generating neural network 410. A transform block 420 of the residual block is obtained by performing matrix multiplication on the residual block 401 and the transform kernel 411. The transform block 420 is quantized and entropy-encoded, and transmitted to a decoding side as a bitstream.

During the decoding process, the transform block 420 obtained from the bitstream is entropy-decoded and inverse-quantized, and then inverse-transform 425 is performed thereon. A linear inverse-transform kernel 430 is used for the inverse-transform 425 of the inverse-quantized residual block. The linear inverse-transform kernel 430 may be one of a plurality of fixed transform kernel, such as a DCT type, a DST type, and the like, which are used in the Codec standard of the related art. A residual block 435 on which the inverse-transform 425 is performed is obtained by performing matrix multiplication on the inverse-quantized residual block and the linear inverse-transform kernel 430. A reconstructed block 445 of the current block is obtained by performing addition 440 on the residual block 435 and the prediction block 403.

FIG. 5 is a diagram for describing AI-based image encoding and decoding processes according to an embodiment of the disclosure.

Referring to FIG. 5, transform 515 is applied to a residual block 501 of a current block. The residual block 501 represents a difference between an original block of the current block and a prediction block 503 of the current block. The transform 515 is performed on the residual block 501 as part of the encoding process. A linear transform kernel 510 is used for the transform 515 of the residual block 501. The linear transform kernel 510 may be one of a plurality of fixed transform kernels, such as a DCT type, a DST type, and the like, which are used in the Codec standard of the related art. A transform block 520 of the residual block 501 on which the transform 515 is performed is obtained by performing matrix multiplication on the residual block 501 and the linear transform kernel 510. The transform block 520 is quantized and entropy-encoded, and transmitted to a decoding side as a bitstream.

During the decoding process, the transform block 520 obtained from the bitstream is entropy-decoded and inverse-quantized, and then inverse-transform 525 is performed thereon. An inverse-transform kernel generating neural network 530 is used to obtain an inverse-transform kernel for the inverse-transform 525. Neighboring pixels 502 of the current block, i.e., reference pixels, the prediction block 503 of the current block, and coding context information 504 are input to the inverse-transform kernel generating neural network 530, and an inverse-transform kernel 531 is output from the inverse-transform kernel generating neural network 530. A residual block 535 on which the inverse-transform 525 is performed is obtained by performing matrix multiplication on the inverse-quantized residual block and the inverse-transform kernel 531. A reconstructed block 545 of the current block is obtained by performing addition 540 on the residual block 535 and the prediction block 503.

FIG. 6 is a diagram for describing AI-based image encoding and decoding processes according to an embodiment of the disclosure.

Referring to FIG. 6, transform is applied to a residual block 601 of a current block during the encoding process. The residual block 601 represents a difference between an original block of the current block and a prediction block 603 of the current block. A transform neural network 615 and a coding context neural network 610 are used for the transform of the residual block 601. Neighboring pixels 602 of the current block, i.e., reference pixels, the prediction block 603 of the current block, and coding context information 604 are input to the coding context neural network 610, and a coding context feature map 611 is output from the coding context neural network 610. A transform feature map 620 is obtained as the coding context feature map 611 and the residual block 601 are input to the transform neural network 615. The transform feature map 620 is quantized and entropy-encoded, and transmitted to a decoding side as a bitstream.

During the decoding process, the transform feature map 620 obtained from the bitstream is entropy-decoded and inverse-quantized. An inverse-transform neural network 625 and a coding context neural network 630 are used for inverse-transform. The neighboring pixels 602 of the current block, i.e., the reference pixels, the prediction block 603 of the current block, and the coding context information 604 are input to the coding context neural network 630, and a coding context feature map 631 is output from the coding context neural network 630. An inverse-transformed residual block 635 is obtained as the inverse-quantized transform feature map 620 and the coding context feature map 631 are input to the inverse-transform neural network 625. A reconstructed block 645 of the current block is obtained by performing addition 640 on the residual block 635 and the prediction block 603.

In detail, at an encoding side, the residual block 601 has a size of MxN. The coding context feature map 611 for transform, which is output from the coding context neural network 610 by inputting the neighboring pixels 602 of the current block, the prediction block 603 of the current block, and the coding context information 604 thereto, has a size of M1xN1xC1. The coding context feature map 611 and the residual block 601 are input to the transform neural network 615, and the transform neural network 615 outputs the transform feature map 620 for a transform coefficient of the residual block 601, which has a size of M2xN2xC2. The transform feature map 620 is quantized and entropy-encoded, and transmitted to the decoding side as the bitstream. At the decoding side, the transform feature map 620 obtained from the bitstream is entropy-decoded and inverse-quantized. The coding context feature map 631 for inverse-transform, which is output from the coding context neural network 630 by inputting the neighboring pixels 602 of the current block, the prediction block 603 of the current block, and the coding context information 604 thereto, is M3xN3xC3. The inverse-transformed residual block 635 having a size of MxN is obtained as the inverse-quantized transform feature map 620 and the coding context feature map 631 are input to the inverse-transform neural network 625. The reconstructed block 645 having a size of MxN is obtained by performing addition 640 on the residual block 635 having a size of MxN and the prediction block 603 having a size of MxN. Here, M, M1, M2, and M3 may not be the same and have different values, N, N1, N2, and N3 may not be the same and have different values, and C1, C2, and C3 may not be the same and have different values.

The transform feature map 620 output from the transform neural network 615 is transmitted as the bitstream, and thus a size thereof is required to be restricted. Accordingly, the transform neural network 615 is a neural network trained to output the transform feature map 620 in a size smaller than those of pieces of input information so as to reduce a bitrate, and the inverse-transform neural network 625 is a neural network trained to output the residual block 635 by reconstructing data from the input transform feature map 620.

The coding context neural network 610 for transform may be a neural network for outputting, in the form of a feature map, pieces of information necessary for the transform, from the neighboring pixels 602 of the current block, the prediction block 603 of the current block, and the coding context information 604, and the coding context neural network 630 for inverse-transform may be a neural network for outputting, in the form of a feature map, pieces of information necessary for the inverse-transform, from the neighboring pixels 602 of the current block, the prediction block 603 of the current block, and the coding context information 604.

Also, the coding context neural network 610 for transform may transmit partial information among the neighboring pixels 602 of the current block, the prediction block 603 of the current block, and the coding context information 604 without any process to be input to the transform neural network 615, and the coding context neural network 630 for inverse-transform may transmit partial information among the neighboring pixels 602 of the current block, the prediction block 603 of the current block, and the coding context information 604 without any process to be input to the inverse-transform neural network 625.

Also, an output of the transform neural network 615 may be the transform feature map 620 for a transform coefficient that is quantized after being transformed, and an output of the inverse-transform neural network 625 may be the residual block 635 that is inverse-transformed after being inverse-quantized. In other words, the transform neural network 615 may be a neural network in which transform and quantization are performed together, and the inverse-transform neural network 625 may be a neural network in which inverse-quantization and inverse-transform are performed together.

In detail, at the encoding side, the size of the residual block 601 is MxN, and the coding context feature map 611 for transform, which is output from the coding context neural network 610 by inputting the neighboring pixels 602 of the current block, the prediction block 603 of the current block, and the coding context information 604 thereto, is M1xN1xC1. The coding context feature map 611 and the residual block 601 are input to the transform neural network 615, and the transform feature map 620 for the quantized transform coefficient of the residual block 601 of M2xN2xC2 is obtained. The transform feature map 620 is entropy-encoded and transmitted to the decoding side as the bitstream. At the decoding side, the transform feature map 620 obtained from the bitstream is entropy-decoded. The coding context feature map 631 for inverse-transform, which is output from the coding context neural network 630 by inputting the neighboring pixels 602 of the current block, the prediction block 603 of the current block, and the coding context information 604 thereto, is M3xN3xC3. The inverse-quantized and inverse-transformed residual block 635 having a size of MxN is obtained as the entropy-decoded transform feature map 620 and the coding context feature map 631 are input to the inverse-transform neural network 625. The reconstructed block 645 having a size of MxN is obtained by performing the addition 640 on the residual block 635 having a size of MxN and the prediction block 603 having a size of MxN. Here, M, M1, M2, and M3 may not be the same and have different values, N, N1, N2, and N3 may not be the same and have different values, and C1, C2, and C3 may not be the same and have different values.

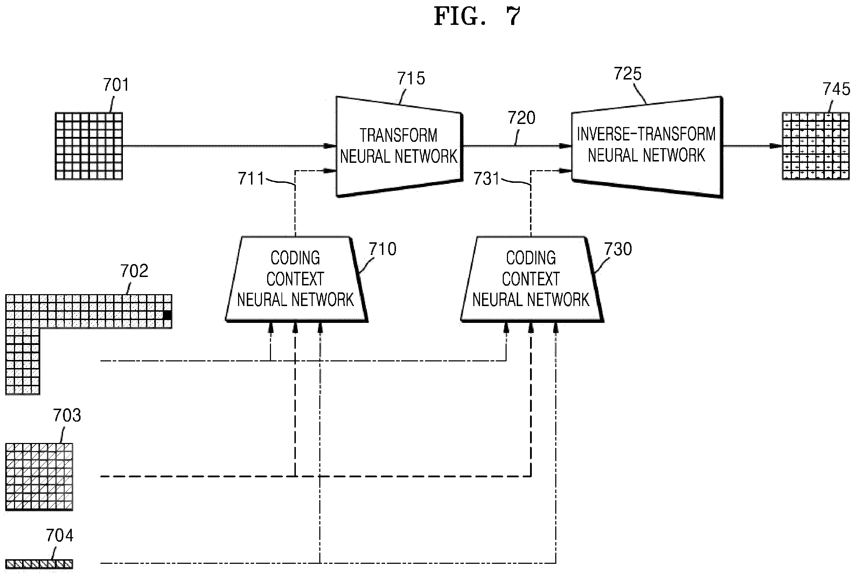

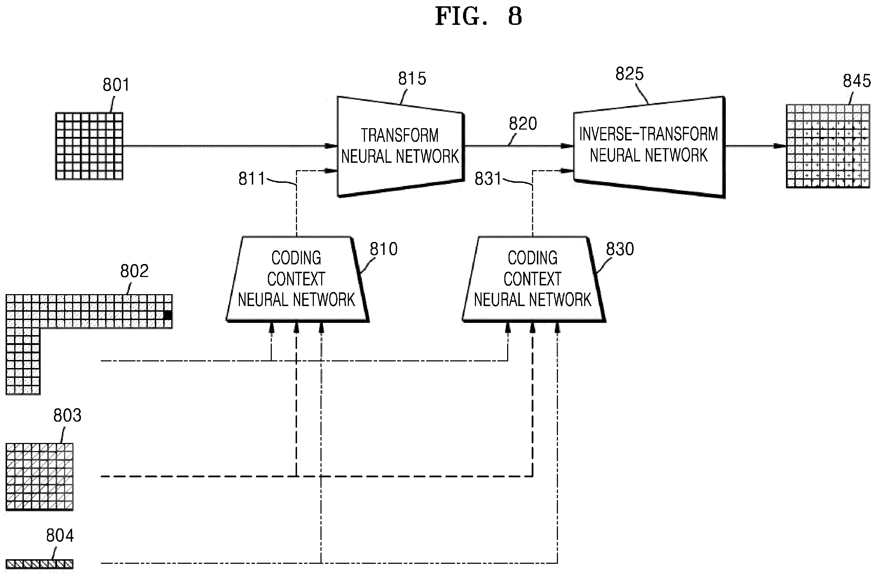

Calculation methods according to sizes of blocks, which are described with reference to FIG. 6, may be identically applied to FIGS. 7 and 8 described below.

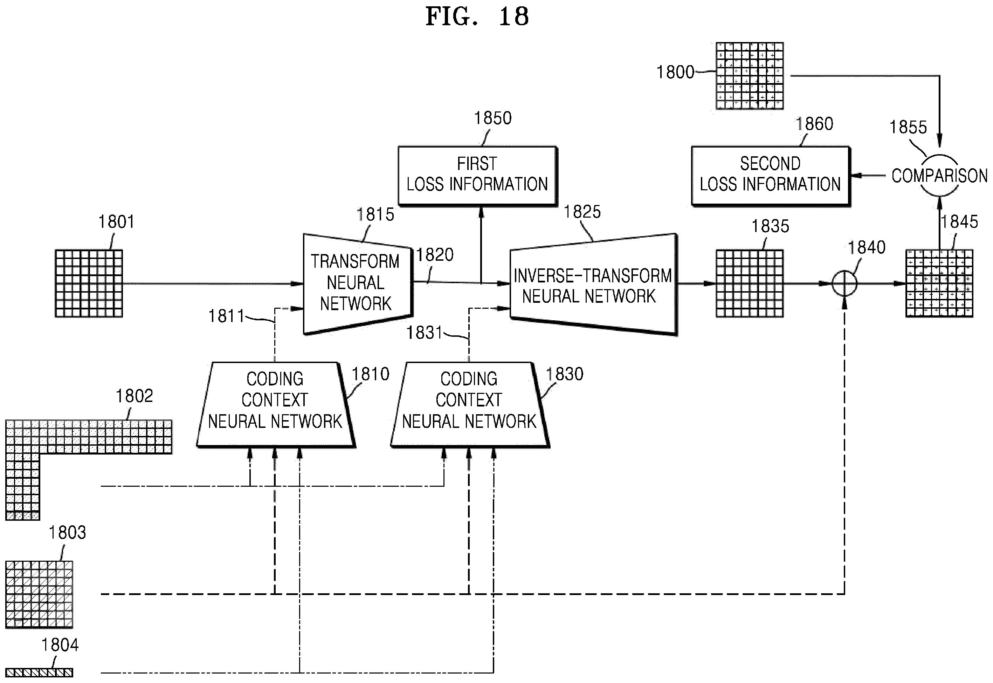

A method of training neural networks used in FIG. 6 will be described below with reference to FIG. 18.

FIG. 7 is a diagram for describing AI-based image encoding and decoding processes according to an embodiment of the disclosure.

Referring to FIG. 7, transform is applied to a residual block 701 of a current block. The residual block 701 represents a difference between an original block of the current block and a prediction block 703 of the current block. The transform is performed on the residual block 701 as part of the encoding process. A transform neural network 715 and a coding context neural network 710 are used for the transform of the residual block 701. Neighboring pixels 702 of the current block, i.e., reference pixels, the prediction block 703 of the current block, and coding context information 704 are input to the coding context neural network 710, and a coding context feature map 711 is output from the coding context neural network 710. The coding context feature map 711 and the residual block 701 are input to the transform neural network 715, and a transform feature map 720 for a transform coefficient of the residual block 701 is obtained. The transform feature map 720 is quantized and entropy-encoded, and transmitted to a decoding side as a bitstream.

During the decoding process, the transform feature map 720 obtained from the bitstream is entropy-decoded and inverse-quantized. An inverse-transform neural network 725 and a coding context neural network 730 are used for inverse-transform. The neighboring pixels 702 of the current block, i.e., the reference pixels, the prediction block 703 of the current block, and the coding context information 704 are input to the coding context neural network 730, and a coding context feature map 731 is output from the coding context neural network 730. A reconstructed block 745 of the current block is obtained as the inverse-quantized transform feature map and the coding context feature map 731 are input to the inverse-transform neural network 725.

The transform feature map 720 output from the transform neural network 715 is transmitted as the bitstream, and thus a size thereof is required to be restricted. Accordingly, the transform neural network 715 is a neural network trained to output the transform feature map 720 in a size smaller than those of pieces of input information so as to reduce a bitrate, and the inverse-transform neural network 725 is a neural network trained to output the reconstructed block 745 by reconstructing data from the input transform feature map 720.

The coding context neural network 710 for transform may be a neural network for outputting, in the form of a feature map, pieces of information necessary for the transform, from the neighboring pixels 702 of the current block, the prediction block 703 of the current block, and the coding context information 704, and the coding context neural network 730 for inverse-transform may be a neural network for outputting, in the form of a feature map, pieces of information necessary for the inverse-transform, from the neighboring pixels 702 of the current block, the prediction block 703 of the current block, and the coding context information 704.

Also, the coding context neural network 710 for transform may transmit partial information among the neighboring pixels 702 of the current block, the prediction block 703 of the current block, and the coding context information 704 without any process to be input to the transform neural network 715, and the coding context neural network 730 for inverse-transform may transmit partial information among the neighboring pixels 702 of the current block, the prediction block 703 of the current block, and the coding context information 704 without any process to be input to the inverse-transform neural network 725.

Also, an output of the transform neural network 715 may be the transform feature map 720 for a transform coefficient that is quantized after being transformed, and an output of the inverse-transform neural network 725 may be the reconstructed block 745 that is inverse-transformed after being inverse-quantized. In other words, the transform neural network 715 may be a neural network in which transform and quantization are performed together, and the inverse-transform neural network 725 may be a neural network in which inverse-quantization and inverse-transform are performed together.

In detail, the residual block 701 of the current block, which is the difference between the original block of the current block and the prediction block 703 of the current block, is a target of transform during the encoding process. The transform neural network 715 and the coding context neural network 710 are used for the transform of the residual block 701. The neighboring pixels 702 of the current block, i.e., the reference pixels, the prediction block 703 of the current block, and the coding context information 704 are input to the coding context neural network 710, and the coding context feature map 711 is output from the coding context neural network 710. The coding context feature map 711 and the residual block 701 are input to the transform neural network 715, and the transform feature map 720 for the quantized transform coefficient of the residual block 701 is obtained. The transform feature map 720 is entropy-encoded, and transmitted to the decoding side as the bitstream.

During the decoding process, the transform feature map 720 obtained from the bitstream is entropy-decoded. The inverse-transform neural network 725 and the coding context neural network 730 are used for inverse-transform. The neighboring pixels 702 of the current block, i.e., the reference pixels, the prediction block 703 of the current block, and the coding context information 704 are input to the coding context neural network 730, and the coding context feature map 731 is output from the coding context neural network 730. The reconstructed block 745 of the current block is obtained as the entropy-decoded transform feature map and the coding context feature map 731 are input to the inverse-transform neural network 725.

FIG. 8 is a diagram for describing AI-based image encoding and decoding processes according to an embodiment of the disclosure.

Referring to FIG. 8, transform is applied to a residual block 801 of a current block. The residual block 801 represents a difference between an original block of the current block and a prediction block 803 of the current block. The transform is performed on the residual block 801 as part of the encoding process. A transform neural network 815 and a coding context neural network 810 are used for the transform of the residual block 801. Neighboring pixels 802 of the current block, i.e., reference pixels, the prediction block 803 of the current block, and coding context information 804 are input to the coding context neural network 810, and a coding context feature map 811 is output from the coding context neural network 810. A transform feature map 820 is obtained as the coding context feature map 811 and the residual block 801 are input to the transform neural network 815. The transform feature map 820 is quantized and entropy-encoded, and transmitted to a decoding side as a bitstream.

During the decoding process, the transform feature map 820 obtained from the bitstream is entropy-decoded and inverse-quantized. An inverse-transform neural network 825 and a coding context neural network 830 are used for inverse-transform. The neighboring pixels 802 of the current block, i.e., the reference pixels, the prediction block 803 of the current block, and the coding context information 804 are input to the coding context neural network 830, and a coding context feature map 831 is output from the coding context neural network 830. The inverse-quantized transform feature map and the coding context feature map 831 are input to the inverse-transform neural network 825, and an extended reconstructed block 845 including a reconstructed block of the current block and the reference pixels of the current block is obtained.

The obtaining of the extended reconstructed block 845 including the reconstructed block of the current block and the reference pixels of the current block may assist a deblocking filter process. In other words, a result of deblocking filtering may be improved.

The transform feature map 820 output from the transform neural network 815 is transmitted as the bitstream, and thus a size thereof is required to be restricted. Accordingly, the transform neural network 815 is a neural network trained to output the transform feature map 820 in a size smaller than those of pieces of input information so as to reduce a bitrate, and the inverse-transform neural network 825 is a neural network trained to output the extended reconstructed block 845 including the reconstructed block of the current block and the reference pixels of the current block, by reconstructing data from the input transform feature map 820.

The coding context neural network 810 for transform may be a neural network for outputting, in the form of a feature map, pieces of information necessary for the transform, from the neighboring pixels 802 of the current block, the prediction block 803 of the current block, and the coding context information 804, and the coding context neural network 830 for inverse-transform may be a neural network for outputting, in the form of a feature map, pieces of information necessary for the inverse-transform, from the neighboring pixels 802 of the current block, the prediction block 803 of the current block, and the coding context information 804.

Also, the coding context neural network 80 for transform may transmit partial information among the neighboring pixels 802 of the current block, the prediction block 803 of the current block, and the coding context information 804 without any process to be input to the transform neural network 815, and the coding context neural network 830 for inverse-transform may transmit partial information among the neighboring pixels 802 of the current block, the prediction block 803 of the current block, and the coding context information 804 without any process to be input to the inverse-transform neural network 825.

Also, an output of the transform neural network 815 may be the transform feature map 820 for a transform coefficient that is quantized after being transformed, and an output of the inverse-transform neural network 825 may be the extended reconstructed block 845 that is inverse-transformed after being inverse-quantized. In other words, the transform neural network 815 may be a neural network in which transform and quantization are performed together, and the inverse-transform neural network 825 may be a neural network in which inverse-quantization and inverse-transform are performed together.

In detail, the residual block 801 of the current block, which is the difference between the original block of the current block and the prediction block 803 of the current block, is a target of transform during the encoding process. the transform neural network 815 and the coding context neural network 810 are used for the transform of the residual block 801. The neighboring pixels 802 of the current block, i.e., the reference pixels, the prediction block 803 of the current block, and the coding context information 804 are input to the coding context neural network 810, and the coding context feature map 811 is output from the coding context neural network 810. The coding context feature map 811 and the residual block 801 are input to the transform neural network 815, and the transform feature map 820 for the quantized transform coefficient of the residual block 801 is obtained. The transform feature map 820 is entropy-encoded, and transmitted to the decoding side as the bitstream.

During the decoding process, the transform feature map 820 obtained from the bitstream is entropy-decoded. The inverse-transform neural network 825 and the coding context neural network 830 are used for inverse-transform. The neighboring pixels 802 of the current block, i.e., the reference pixels, the prediction block 803 of the current block, and the coding context information 804 are input to the coding context neural network 830, and the coding context feature map 831 is output from the coding context neural network 830. The entropy-decoded transform feature map and the coding context feature map 831 are input to the inverse-transform neural network 825, and the extended reconstructed block 845 including the reconstructed block of the current block and the reference pixels of the current block is obtained.

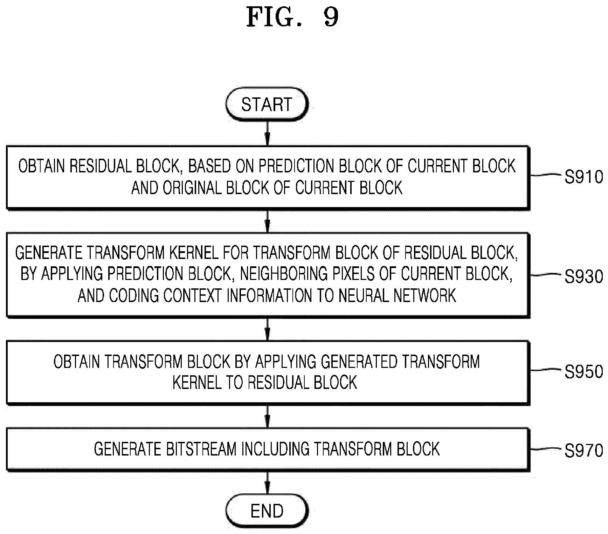

FIG. 9 is a flowchart of an AI-based image encoding method according to an embodiment of the disclosure.

Referring to FIG. 9, in operation S910, an AI-based image encoding apparatus 1000 obtains a residual block, based on a prediction block of a current block and an original block of the current block. The residual block may represent a difference between the original block and the prediction block of the current block. The original block may be a portion of an image that the AI-based image encoding apparatus 1000 intends to encode or decode, and the prediction block is made for the original block based on neighboring blocks to estimate what the original block looks like. The residual block may be obtained by subtracting the prediction block from the original block to represent the different between the prediction block and the actual content within the original block.

In operation S930, the AI-based image encoding apparatus 1000 generates a transform kernel for a transform block of the residual block, by applying the prediction block, neighboring pixels of the current block, and coding context information to a neural network.

In operation S950, the AI-based image encoding apparatus 1000 obtains the transform block by applying the generated transform kernel to the residual block. The transform may be performed to reduce the amount of data needed to represent the original block.

According to an embodiment of the disclosure, the generated transform kernel may include a left transform kernel to be applied to a left side of the residual block and a right transform kernel to be applied to a right side of the residual block.

In operation S970, the AI-based image encoding apparatus 1000 generates a bitstream including the transform block.

According to an embodiment of the disclosure, the transform block may be inverse-transformed by a neural network-based transform kernel or inverse-transformed by one linear transform kernel from among a plurality of pre-determined linear transform kernels, during an image decoding process.

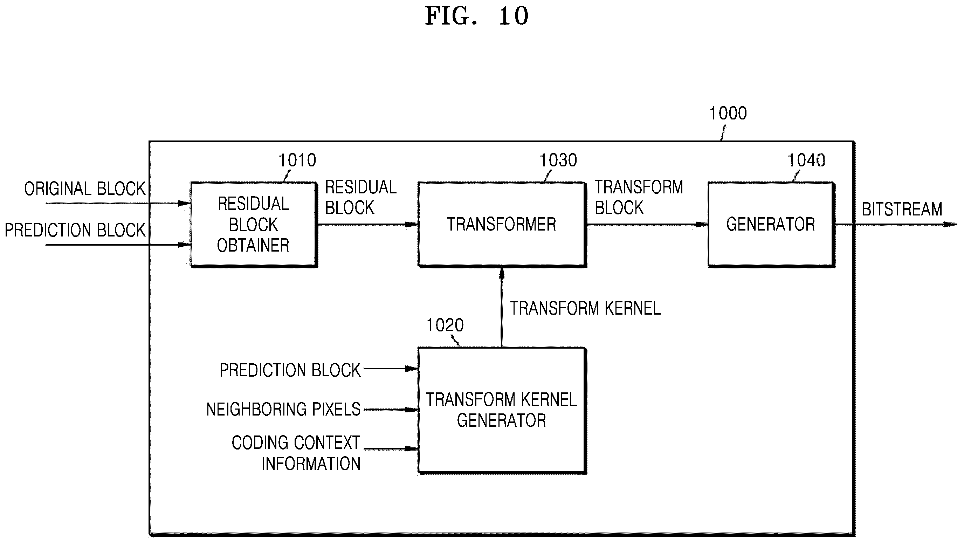

FIG. 10 is a diagram of a configuration of the AI-based image encoding apparatus, according to an embodiment of the disclosure.

Referring to FIG. 10, the AI-based image encoding apparatus 1000 may include a residual block obtainer 1010, a transform kernel generator 1020, a transformer 1030, and a generator 1040.

The residual block obtainer 1010, the transform kernel generator 1020, the transformer 1030, and the generator 1040 may be implemented as a processor. The residual block obtainer 1010, the transform kernel generator 1020, the transformer 1030, and the generator 1040 may operate according to instructions stored in a memory.

In FIG. 10, the residual block obtainer 1010, the transform kernel generator 1020, the transformer 1030, and the generator 1040 are individually illustrated, but the residual block obtainer 1010, the transform kernel generator 1020, the transformer 1030, and the generator 1040 may be implemented through one processor. In this case, the residual block obtainer 1010, the transform kernel generator 1020, the transformer 1030, and the generator 1040 may be implemented as a dedicated processor or may be implemented through a combination of software and a general-purpose processor, such as an application processor (AP), a central processing unit (CPU), or a graphics processing unit (GPU). The dedicated processor may include a memory for implementing an embodiment of the disclosure or include a memory processor for using an external memory.

The residual block obtainer 1010, the transform kernel generator 1020, the transformer 1030, and the generator 1040 may be implemented as a plurality of processors. In this case, the residual block obtainer 1010, the transform kernel generator 1020, the transformer 1030, and the generator 1040 may be implemented as a combination of dedicated processors or may be implemented as a combination of software and a plurality of general-purpose processors, such as AP, CPU, or GPU. The processor may include an AI dedicated processor. As another example, the AI dedicated processor may be configured as a chip separate from the processor.

The residual block obtainer 1010 obtains a residual block, based on a prediction block of a current block and an original block of the current block.

The transform kernel generator 1020 generates a transform kernel for a transform block of the residual block by applying, to a neural network, the prediction block, neighboring pixels of the current block, and coding context information.

The transformer 1030 obtains the transform block by applying the generated transform kernel to the residual block.

The generator 1040 generates a bitstream including the transform block.

The bitstream may be transmitted to an AI-based image decoding apparatus 1200.

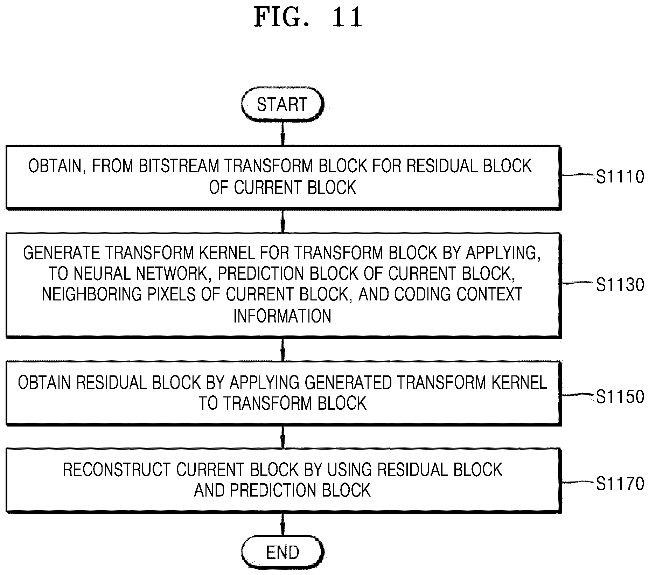

FIG. 11 is a flowchart of an AI-based image decoding method according to an embodiment of the disclosure.

Referring to FIG. 11, in operation S1110, the AI-based image decoding apparatus 1200 obtains, from a bitstream, a transform block for a residual block of a current block.

According to an embodiment of the disclosure, the transform block may be a block transformed by a neural network-based transform kernel or transformed by one linear transform kernel from among a plurality of pre-determined linear transform kernels.

In operation S1130, the AI-based image decoding apparatus 1200 generates a transform kernel for the transform block, by inputting a prediction block of the current block, neighboring pixels of the current block, and coding context information to a neural network, and by obtaining the transform kernel as an output of the neural network.

According to an embodiment of the disclosure, the coding context information may include at least one of a quantization parameter of the current block, a split tree structure of the current block, a split structure of the neighboring pixels, a split type of the current block, or a split type of the neighboring pixels.

In operation S1150, the AI-based image decoding apparatus 1200 obtains the residual block by applying the generated transform kernel to the transform block.

According to an embodiment of the disclosure, the generated transform kernel may include a left transform kernel to be applied to a left side of the transform block and a right transform kernel to be applied to a right side of the transform block.

In operation S1170, the AI-based image decoding apparatus 1200 reconstructs the current block by using the residual block and the prediction block.

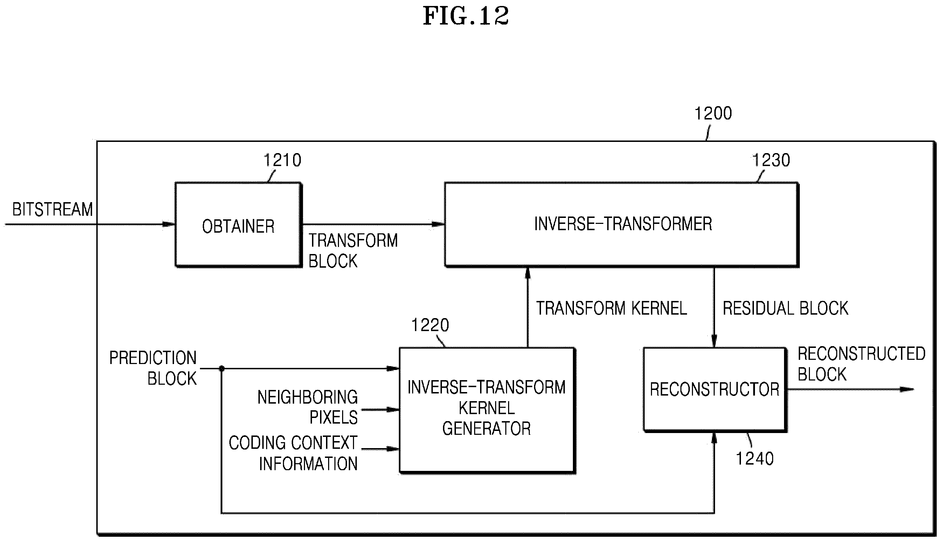

FIG. 12 is a diagram of a configuration of the AI-based image decoding apparatus, according to an embodiment of the disclosure.

Referring to FIG. 12, the AI-based image decoding apparatus 1200 may include an obtainer 1210, an inverse-transform kernel generator 1220, an inverse-transformer 1230, and a reconstructor 1240.

The obtainer 1210, the inverse-transform kernel generator 1220, the inverse-transformer 1230, and the reconstructor 1240 may be implemented as a processor. The obtainer 1210, the inverse-transform kernel generator 1220, the inverse-transformer 1230, and the reconstructor 1240 may operate according to instructions stored in a memory.

In FIG. 12, the obtainer 1210, the inverse-transform kernel generator 1220, the inverse-transformer 1230, and the reconstructor 1240 are individually illustrated, but the obtainer 1210, the inverse-transform kernel generator 1220, the inverse-transformer 1230, and the reconstructor 1240 may be implemented through one processor. In this case, the obtainer 1210, the inverse-transform kernel generator 1220, the inverse-transformer 1230, and the reconstructor 1240 may be implemented as a dedicated processor or may be implemented through a combination of software and a general-purpose processor, such as an AP, a CPU, or a GPU. The dedicated processor may include a memory for implementing an embodiment of the disclosure or include a memory processor for using an external memory.

The obtainer 1210, the inverse-transform kernel generator 1220, the inverse-transformer 1230, and the reconstructor 1240 may be implemented as a plurality of processors. In this case, the obtainer 1210, the inverse-transform kernel generator 1220, the inverse-transformer 1230, and the reconstructor 1240 may be implemented as a combination of dedicated processors or may be implemented as a combination of software and a plurality of general-purpose processors, such as AP, CPU, or GPU. The processor may include an AI dedicated processor. As another example, the AI dedicated processor may be configured as a chip separate from the processor.

The obtainer 1210 obtains a transform block for a residual block of a current block, from a bitstream.

The bitstream may be generated by and transmitted from the AI-based image encoding apparatus 1000.

The inverse-transform kernel generator 1220 generates a transform kernel for the transform block by applying, to a neural network, a prediction block, neighboring pixels of the current block, and coding context information.

The inverse-transformer 1230 obtains the residual block by applying the generated transform kernel to the transform block.

The reconstructor 1240 reconstructs the current block by using the residual block and the prediction block.

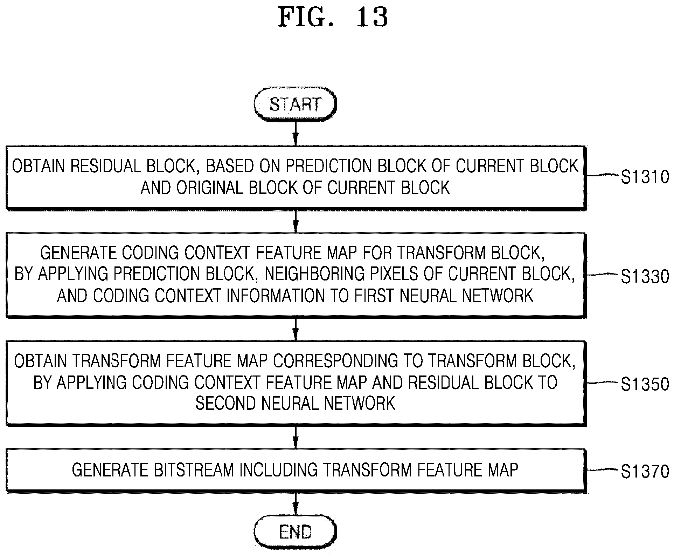

FIG. 13 is a flowchart of an AI-based image encoding method according to an embodiment of the disclosure.

Referring to FIG. 13, in operation S1310, an AI-based image encoding apparatus 1400 obtains a residual block, based on a prediction block of a current block and an original block of the current block.

In operation S1330, the AI-based image encoding apparatus 1400 generates a coding context feature map for a transform block, by applying the prediction block, neighboring pixels of the current block, and coding context information to a first neural network.

In operation S1350, the AI-based image encoding apparatus 1400 obtains a transform feature map corresponding to the transform block, by inputting the coding context feature map and the residual block to a second neural network, and by obtaining the transform feature map as an output of the second neural network.

According to an embodiment of the disclosure, the second neural network may output the transform feature map for a quantized transform coefficient.

In operation S1370, the AI-based image encoding apparatus 1400 generates a bitstream including the transform feature map.

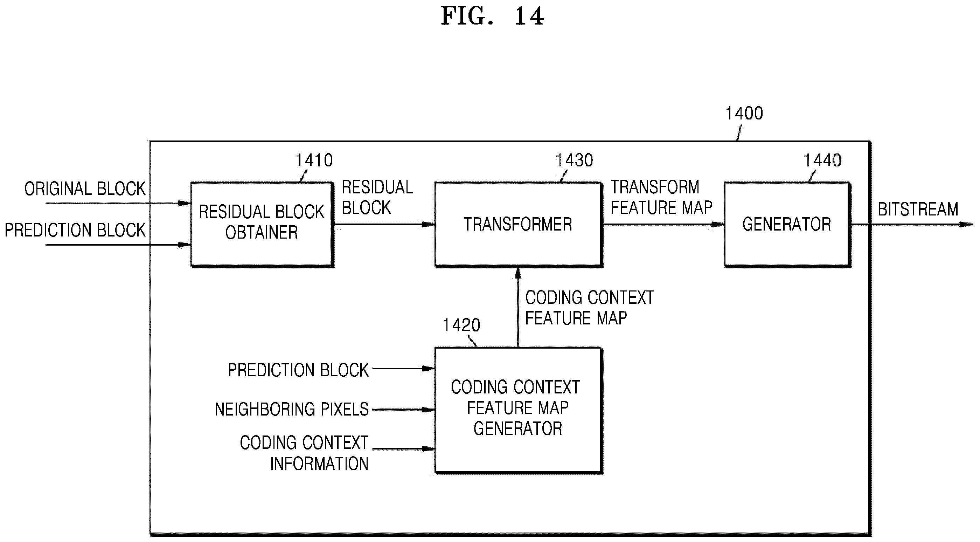

FIG. 14 is a diagram of a configuration of an AI-based image encoding apparatus, according to an embodiment of the disclosure.

Referring to FIG. 14, the AI-based image encoding apparatus 1400 may include a residual block obtainer 1410, a coding context feature map generator 1420, a transformer 1430, and a generator 1440.

The residual block obtainer 1410, the coding context feature map generator 1420, the transformer 1430, and the generator 1440 may be implemented as a processor. The residual block obtainer 1410, the coding context feature map generator 1420, the transformer 1430, and the generator 1440 may operate according to instructions stored in a memory.

In FIG. 14, the residual block obtainer 1410, the coding context feature map generator 1420, the transformer 1430, and the generator 1440 are individually illustrated, but the residual block obtainer 1410, the coding context feature map generator 1420, the transformer 1430, and the generator 1440 may be implemented through one processor. In this case, the residual block obtainer 1410, the coding context feature map generator 1420, the transformer 1430, and the generator 1440 may be implemented as a dedicated processor or may be implemented through a combination of software and a general-purpose processor, such as an AP, a CPU, or a GPU. The dedicated processor may include a memory for implementing an embodiment of the disclosure or include a memory processor for using an external memory.

The residual block obtainer 1410, the coding context feature map generator 1420, the transformer 1430, and the generator 1440 may be implemented as a plurality of processors. In this case, the residual block obtainer 1410, the coding context feature map generator 1420, the transformer 1430, and the generator 1440 may be implemented as a combination of dedicated processors or may be implemented as a combination of software and a plurality of general-purpose processors, such as AP, CPU, or GPU. The processor may include an AI dedicated processor. As another example, the AI dedicated processor may be configured as a chip separate from the processor.

The residual block obtainer 1410 obtains a residual block, based on a prediction block of a current block and an original block of the current block.

The coding context feature map generator 1420 generates a coding context feature map for a transform block by applying, to a first neural network, the prediction block, neighboring pixels of the current block, and coding context information.

The transformer 1430 obtains a transform feature map corresponding to the transform block by applying, to a second neural network, the coding context feature map and the residual block.

The generator 1440 generates a bitstream including the transform feature map.

The bitstream may be transmitted to an AI-based image decoding apparatus 1600.

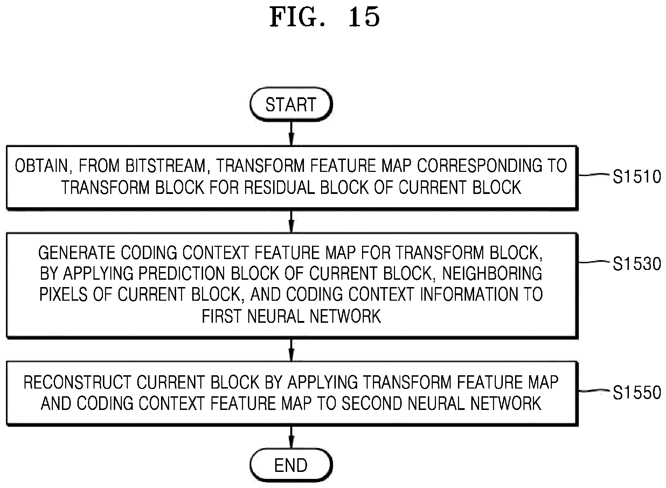

FIG. 15 is a flowchart of an AI-based image decoding method according to an embodiment of the disclosure.

Referring to FIG. 15, in operation S1510, the AI-based image decoding apparatus 1600 obtains, from a bitstream, a transform feature map corresponding to a transform block for a residual block of a current block.

**In** operation S1530, the AI-based image decoding apparatus 1600 generates a coding context feature map for the transform block, by inputting a prediction block of the current block, neighboring pixels of the current block, and coding context information to a first neural network, and by obtaining the coding context feature map as an output of the first neural network.

**In** operation S1550, the AI-based image decoding apparatus 1600 reconstructs the current block by inputting the transform feature map and the coding context feature map to a second neural network, and by obtaining the reconstructed current block as an output of the second neural network.

According to an embodiment of the disclosure, the second neural network may output a result value obtained by performing inverse-transform after inverse-quantization.

According to an embodiment of the disclosure, the reconstructing of the current block may include obtaining the residual block by applying the transform feature map and the coding context feature map to the second neural network, and reconstructing the current block by using the residual block and the prediction block.

According to an embodiment of the disclosure, the reconstructed current block may further include the neighboring pixels of the current block for deblocking filtering of the current block.

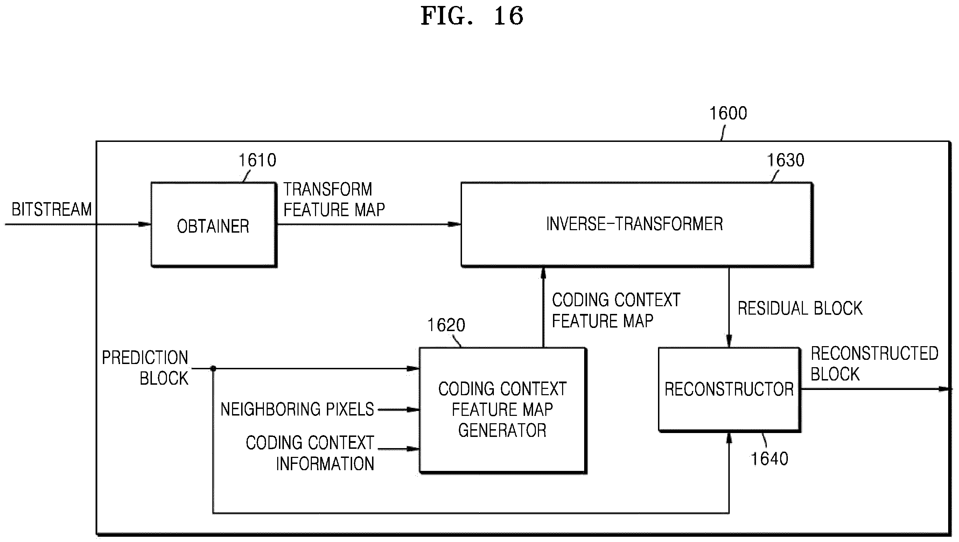

FIG. 16 is a diagram of a configuration of the AI-based image decoding apparatus, according to an embodiment of the disclosure.

Referring to FIG. 16, the AI-based image decoding apparatus 1600 may include an obtainer 1610, a coding context feature map generator 1620, an inverse-transformer 1630, and a reconstructor 1640.

The obtainer 1610, the coding context feature map generator 1620, the inverse-transformer 1630, and the reconstructor 1640 may be implemented as a processor. The obtainer 1610, the coding context feature map generator 1620, the inverse-transformer 1630, and the reconstructor 1640 may operate according to instructions stored in a memory.

In FIG. 16, the obtainer 1610, the coding context feature map generator 1620, the inverse-transformer 1630, and the reconstructor 1640 are individually illustrated, but the obtainer 1610, the coding context feature map generator 1620, the inverse-transformer 1630, and the reconstructor 1640 may be implemented through one processor. In this case, the obtainer 1610, the coding context feature map generator 1620, the inverse-transformer 1630, and the reconstructor 1640 may be implemented as a dedicated processor or may be implemented through a combination of software and a general-purpose processor, such as an AP, a CPU, or a GPU. The dedicated processor may include a memory for implementing an embodiment of the disclosure or include a memory processor for using an external memory.

The obtainer 1610, the coding context feature map generator 1620, the inverse-transformer 1630, and the reconstructor 1640 may be implemented as a plurality of processors. In this case, the obtainer 1610, the coding context feature map generator 1620, the inverse-transformer 1630, and the reconstructor 1640 may be implemented as a combination of dedicated processors or may be implemented as a combination of software and a plurality of general-purpose processors, such as AP, CPU, or GPU. The processor may include an AI dedicated processor. As another example, the AI dedicated processor may be configured as a chip separate from the processor.

The obtainer 1610 obtains, for a bitstream, a transform feature map corresponding to a transform block for a residual block of a current block.

The bitstream may be generated by and transmitted from the AI-based image encoding apparatus 1400.

The coding context feature map generator 1620 generates a coding context feature map for the transform block by applying, to a first neural network, a prediction block of the current block, neighboring pixels of the current block, and coding context information.

The inverse-transformer 1630 obtains the residual block by applying the transform feature map and the coding context feature map to a second neural network.

The reconstructor 1640 obtains a reconstructed block by using the residual block and the prediction block.

According to an embodiment of the disclosure, the inverse-transformer 1630 may obtain the reconstructed block by inputting the transform feature map and the coding context feature map to a second neural network. In this case, the reconstructor 1640 may be omitted in the AI-based image decoding apparatus 1600.

According to an embodiment of the disclosure, the inverse-transformer 1630 may obtain an extended reconstructed block including the reconstructed block of the current block and the neighboring pixels of the current block for deblocking filtering of the current block by inputting the transform feature map and the coding context feature map to the second neural network. In this case, the reconstructor 1640 may be omitted in the AI-based image decoding apparatus 1600.

FIG. 17 is a diagram for describing a method of training neural networks used in an AI-based image encoding method and an AI-based image decoding method, according to an embodiment of the disclosure.

Referring to FIG. 17, a transform kernel generating neural network 1710 and an inverse-transform kernel generating neural network 1730 may be trained by using a training original block 1700, a training residual block 1701, training neighboring pixels 1702, a training prediction block 1703, and training coding context information 1704.

In detail, a training transform kernel 1711 is generated when the training neighboring pixels 1702, the training prediction block 1703, and the training coding context information 1704 are input to the transform kernel generating neural network 1710. A training transform block 1720 is obtained by performing transform 1715 by using the training residual block 1701 and the training transform kernel 1711. The training transform block 1720 is quantized and entropy-encoded, and transmitted in the form of a bitstream.

Also, the training transform block 1720 is entropy-decoded and inverse-quantized. A training inverse-transform kernel 1731 is generated when the training neighboring pixels 1702, the training prediction block 1703, and the training coding context information 1704 are input to the inverse-transform kernel generating neural network 1730. A training inverse-transformed residual block 1735 is obtained by performing inverse-transform 1725 by using the training transform block 1720 and the training inverse-transform kernel 1731. A training reconstructed block 1745 is obtained by performing addition 1740 on the training inverse-transformed residual block 1735 and the training prediction block 1703.

During training processes of FIG. 17, the neural networks may be trained such that the training reconstructed block 1745 is similar to the training original block 1700 as much as possible through comparison 1755, and a bitrate of the bitstream generated through encoding on the training transform block 1720 is minimized. In this regard, as shown in FIG. 17, first loss information 1750 and second loss information 1760 may be used while training the neural networks.

The second loss information 1760 may correspond to a difference between the training original block 1700 and the training reconstructed block 1745. According to an embodiment of the disclosure, the difference between the training original block 1700 and the training reconstructed block 1745 may include at least one of an L1-norm value, L2-norm value, structural similarity (SSIM) value, peak signal-to-noise ratio-human vision system (PSNR-HVS) value, multiscale SSIM (MS-SSIM) value, variance inflation factor (VIF) value, or video multimethod assessment fusion (VMAF) value between the training original block 1700 and the training reconstructed block 1745.

The second loss information 1760 indicates quality of a reconstructed image including the training reconstructed block 1745, and thus may be referred to as quality loss information.

The first loss information 1750 may be calculated from the bitrate of the bitstream generated as a result of encoding the training transform block 1720. For example, the first loss information 1750 may be computed based on a bitrate difference between the training residual block 1701 and the training transform block 1720.

The first loss information 1750 indicates encoding efficiency for the training transform block 1720, and thus may be referred to as compression loss information.

The transform kernel generating neural network 1710 and the inverse-transform kernel generating neural network 1730 may be trained such that final loss information derived from either one or a combination of the first loss information 1750 and the second loss information 1760 is reduced or minimized.

According to an embodiment of the disclosure, the transform kernel generating neural network 1710 and the inverse-transform kernel generating neural network 1730 may reduce or minimize the final loss information while changing a value of a pre-set parameter.

According to an embodiment of the disclosure, the final loss information may be calculated according to Equation 1 below. Final Loss Information = a × First Loss Information + b × Second Loss Information

In Equation 1, a and b are weights applied to the first loss information 1750 and the second loss information 1760, respectively.

According to Equation 1, it is determined that the transform kernel generating neural network 1710 and the inverse-transform kernel generating neural network 1730 are trained such that the training reconstructed block 1745 becomes similar to the training original block 1700 as much as possible and a size of the bitstream is minimized.

The transform kernel generating neural network 1710 and the inverse-transform kernel generating neural network 1730 of FIG. 17 may correspond to the transform kernel generating neural network 310 and the inverse-transform kernel generating neural network 330 of FIG. 3, respectively.

The transform kernel generating neural network 410 of FIG. 4 may be trained by using a linear inverse-transform kernel of the related art instead of the training inverse-transform kernel 1731, except for the inverse-transform kernel generating neural network 1730, during the training method of FIG. 17.

Also, the transform kernel generating neural network 410 of FIG. 4 may correspond to the transform kernel generating neural network 1710 of FIG. 17.

The inverse-transform kernel generating neural network 530 of FIG. 5 may be trained by using a linear transform kernel of the related art instead of the training transform kernel 1711, except for the transform kernel generating neural network 1710, during the training method of FIG. 17.

Also, the inverse-transform kernel generating neural network 530 of FIG. 5 may correspond to the inverse-transform kernel generating neural network 1730 of FIG. 17.

FIG. 18 is a diagram for describing a method of training neural networks used in an AI-based image encoding method and an AI-based image decoding method, according to an embodiment of the disclosure.

Referring to FIG. 18, a coding context neural network 1810, a transform neural network 1815, an inverse-transform neural network 1825, and a coding context neural network 1830 may be trained by using a training original block 1800, a training residual block 1801, training neighboring pixels 1802, a training prediction block 1803, and training coding context information 1804.

In detail, a training coding context feature map 1811 is generated when the training neighboring pixels 1802, the training prediction block 1803, and the training coding context information 1804 are input to the coding context neural network 1810. A training transform feature map 1820 is obtained by inputting the training residual block 1801 and the training coding context feature map 1811 to the transform neural network 1815. The training transform feature map 1820 is quantized and entropy-encoded, and transmitted in the form of a bitstream.

Also, the training transform feature map 1820 is entropy-decoded and inverse-quantized. A training coding context feature map 1831 is generated when the training neighboring pixels 1802, the training prediction block 1803, and the training coding context information 1804 are input to the coding context neural network 1830. A training inverse-transformed residual block 1835 is obtained by applying the training transform feature map 1820 and the training coding context feature map 1831 to the inverse-transform neural network 1825. A training reconstructed block 1845 is obtained by performing addition 1840 on the training inverse-transformed residual block 1835 and the training prediction block 1803.

During training processes of FIG. 18, the neural networks may be trained such that the training reconstructed block 1845 is similar to the training original block 1800 as much as possible through comparison 1855, and a bitrate of the bitstream generated through encoding on the training transform feature map 1820 is minimized. In this regard, as shown in FIG. 18, first loss information 1850 and second loss information 1860 may be used while training the neural networks.

The second loss information 1860 may correspond to a difference between the training original block 1800 and the training reconstructed block 1845. According to an embodiment of the disclosure, the difference between the training original block 1800 and the training reconstructed block 1845 may include at least one of an L1-norm value, L2-norm value, structural similarity (SSIM) value, peak signal-to-noise ratio-human vision system (PSNR-HVS) value, multiscale SSIM (MS-SSIM) value, variance inflation factor (VIF) value, or video multimethod assessment fusion (VMAF) value between the training original block 1800 and the training reconstructed block 1845.

The second loss information 1860 is related to quality of a reconstructed image including the training reconstructed block 1845, and thus may be referred to as quality loss information.

The first loss information 1850 may be calculated from the bitrate of the bitstream generated as a result of encoding the training transform feature map 1820. For example, the first loss information 1850 may be computed based on a bitrate difference between the training residual block 1801 and the training transform block 1820.

The first loss information 1850 is related to encoding efficiency for the training transform feature map 1820, and thus may be referred to as compression loss information.

The coding context neural network 1810, the transform neural network 1815, the inverse-transform neural network 1825, and the coding context neural network 1830 may be trained such that final loss information derived from either one or a combination of the first loss information 1850 and the second loss information 1860 is reduced or minimized.

According to an embodiment of the disclosure, the coding context neural network 1810, the transform neural network 1815, the inverse-transform neural network 1825, and the coding context neural network 1830 may reduce or minimize the final loss information while changing a value of a pre-set parameter.

According to an embodiment of the disclosure, the final loss information may be calculated according to Equation 2 below. Final Loss Information = a × First Loss Information + b × Second Loss Information

In Equation 2, a and b are weights applied to the first loss information 1850 and the second loss information 1860, respectively.

According to Equation 2, it is determined that the coding context neural network 1810, the transform neural network 1815, the inverse-transform neural network 1825, and the coding context neural network 1830 are trained such that the training reconstructed block 1845 becomes similar to the training original block 1800 as much as possible, and a size of the bitstream is minimized.

According to an embodiment of the disclosure, the transform neural network 1815 may output not only a result for a transform coefficient, but also a quantization result. In other words, the training transform feature map 1820 obtained from the transform neural network 1815 may be a transform feature map for a quantized transform coefficient. Accordingly, the training transform feature map 1820 is entropy-encoded and transmitted in the form of the bitstream.

Also, the inverse-transform neural network 1825 may perform not only inverse-transform, but also inverse-quantization. In other words, the training transform feature map 1820 may be entropy-decoded, and the training transform feature map 1820 and the training coding context feature map 1831 may be applied to the inverse-transform neural network 1825, and thus the training inverse-quantized and inverse-transformed residual block 1835 may be obtained.

The coding context neural network 610, the transform neural network 615, the inverse-transform neural network 625, and the coding context neural network 630 of FIG. 6 may correspond to the coding context neural network 1810, the transform neural network 1815, the inverse-transform neural network 1825, and the coding context neural network 1830 of FIG. 18, respectively.

Also, the coding context neural network 710, the transform neural network 715, and the coding context neural network 730 of FIG. 7 may correspond to the coding context neural network 1810, the transform neural network 1815, and the coding context neural network 1830 of FIG. 18, respectively, and unlike the inverse-transform neural network 1825 of FIG. 18, a value output from the inverse-transform neural network 725 of FIG. 7 may be the training reconstructed block 1845 rather than the training inverse-transformed residual block 1835.

Also, the coding context neural network 810, the transform neural network 815, and the coding context neural network 830 of FIG. 8 may correspond to the coding context neural network 1810, the transform neural network 1815, and the coding context neural network 1830 of FIG. 18, respectively, and unlike the inverse-transform neural network 1825 of FIG. 18, a value output from the inverse-transform neural network 825 of FIG. 8 may be an extended reconstructed block including the training reconstructed block 1845 and neighboring pixels of training reconstructed block 1845 rather than the training inverse-transformed residual block 1835.

An AI-based image decoding method according to an embodiment of the disclosure may include: obtaining a transform block for a residual block of a current block, from a bitstream; generating a transform kernel for the transform block by applying, to a neural network, a prediction block for the current block, neighboring pixels of the current block, and coding context information; obtaining the residual block by applying the generated transform kernel to the transform block; and reconstructing the current block by using the residual block and the prediction block.

In the AI-based image decoding method according to an embodiment of the disclosure, a more suitable transform kernel may be used through the neural network using the neighboring pixels, the prediction block, and the coding context information, unlike the standard of the related art where a few fixed transform kernels are used, and because the neighboring pixels, the prediction block, and the coding context information are used, additional information for determining the transform kernel is not required to be transmitted, and thus transmitted data is not increased. In other words, coding context is usable at a decoding side, and thus a bitrate may be decreased when only supplementary information required to generate satisfactory transform in terms of the bitrate is transmitted, and the neighboring pixels and the prediction block includes information related to the residual block, and thus overhead transmitted to the decoding side for inverse-transform may be controlled.

Also, the transform kernel generated through the neural network is very adaptive to various features of a block to be transformed, and all pieces of context information are flexibly integrated and reflected. In other words, the coding context including information valuable to the block to be transformed is considered and the coding context may be considered for both encoding and decoding sides, and thus utility is maximized.

According to an embodiment of the disclosure, the coding context information may include at least one of a quantization parameter of the current block, a split tree structure of the current block, a split structure of the neighboring pixels, a split type of the current block, or a split type of the neighboring pixels.

According to an embodiment of the disclosure, the transform block may be a block transformed by a neural network-based transform kernel or transformed by one linear transform kernel from among a plurality of pre-determined linear transform kernels.

According to an embodiment of the disclosure, the generated transform kernel may include a left transform kernel to be applied to a left side of the transform kernel and a right transform kernel to be applied to a right side of the transform block.

An AI-based image decoding apparatus according to an embodiment of the disclosure may include: a memory storing one or more instructions; and at least one processor configured to operate according to the one or more instructions to: obtain a transform block for a residual block of a current block, from a bitstream; generate a transform kernel for the transform block by applying, to a neural network, a prediction block for the current block, neighboring pixels of the current block, and coding context information; obtain the residual block by applying the generated transform kernel to the transform block; and reconstruct the current block by using the residual block and the prediction block.

In the AI-based image decoding apparatus according to an embodiment of the disclosure, a more suitable transform kernel may be used through the neural network using the neighboring pixels, the prediction block, and the coding context information, unlike the standard of the related art where a few fixed transform kernels are used, and because the neighboring pixels, the prediction block, and the coding context information are used, additional information for determining the transform kernel is not required to be transmitted, and thus transmitted data is not increased. In other words, coding context is usable at a decoding side, and thus a bitrate may be decreased when only supplementary information required to generate satisfactory transform in terms of the bitrate is transmitted, and the neighboring pixels and the prediction block includes information related to the residual block, and thus overhead transmitted to the decoding side for inverse-transform may be controlled.

According to an embodiment of the disclosure, the coding context information may include at least one of a quantization parameter of the current block, a split tree structure of the current block, a split structure of the neighboring pixels, a split type of the current block, or a split type of the neighboring pixels.

According to an embodiment of the disclosure, the transform block may be a block transformed by a neural network-based transform kernel or transformed by one linear transform kernel from among a plurality of pre-determined linear transform kernels.

According to an embodiment of the disclosure, the generated transform kernel may include a left transform kernel to be applied to a left side of the transform kernel and a right transform kernel to be applied to a right side of the transform block.

An AI-based image encoding method according to an embodiment of the disclosure may include: obtaining a residual block, based on a prediction block of a current block and an original block of the current block; generating a transform kernel for a transform block of the residual block by applying, to a neural network, the prediction block, neighboring pixels of the current block, and coding context information; obtaining the transform block by applying the generated transform kernel to the residual block; and generating a bitstream including the transform block.

In the AI-based image encoding method according to an embodiment of the disclosure, a more suitable transform kernel may be used through the neural network using the neighboring pixels, the prediction block, and the coding context information, unlike the standard of the related art where a few fixed transform kernels are used, and because the neighboring pixels, the prediction block, and the coding context information are used, additional information for determining the transform kernel is not required to be transmitted, and thus transmitted data is not increased. In other words, coding context is usable at a decoding side, and thus a bitrate may be decreased when only supplementary information required to generate satisfactory transform in terms of the bitrate is transmitted, and the neighboring pixels and the prediction block includes information related to the residual block, and thus overhead transmitted to the decoding side for inverse-transform may be controlled.

According to an embodiment of the disclosure, the transform block may be inverse-transformed by a neural network-based transform kernel or inverse-transformed by one linear transform kernel from among a plurality of pre-determined linear transform kernels, during an image decoding process.

According to an embodiment of the disclosure, the generated transform kernel may include a left transform kernel to be applied to a left side of the residual block and a right transform kernel to be applied to a right side of the residual block.

An AI-based image encoding apparatus according to an embodiment of the disclosure may include: a memory storing one or more instructions; and at least one processor configured to operate according to the one or more instructions to: obtain a residual block, based on a prediction block of a current block and an original block of the current block; generate a transform kernel for a transform block of the residual block by applying, to a neural network, the prediction block, neighboring pixels of the current block, and coding context information; obtain the transform block by applying the generated transform kernel to the residual block; and generate a bitstream including the transform block.

**In** the AI-based image encoding apparatus according to an embodiment of the disclosure, a more suitable transform kernel may be used through the neural network using the neighboring pixels, the prediction block, and the coding context information, unlike the standard of the related art where a few fixed transform kernels are used, and because the neighboring pixels, the prediction block, and the coding context information are used, additional information for determining the transform kernel is not required to be transmitted, and thus transmitted data is not increased. In other words, coding context is usable at a decoding side, and thus a bitrate may be decreased when only supplementary information required to generate satisfactory transform in terms of the bitrate is transmitted, and the neighboring pixels and the prediction block includes information related to the residual block, and thus overhead transmitted to the decoding side for inverse-transform may be controlled.

According to an embodiment of the disclosure, the transform block may be inverse-transformed by a neural network-based transform kernel or inverse-transformed by one linear transform kernel from among a plurality of pre-determined linear transform kernels, during an image decoding process.

According to an embodiment of the disclosure, the generated transform kernel may include a left transform kernel to be applied to a left side of the residual block and a right transform kernel to be applied to a right side of the residual block.

An AI-based image decoding method according to an embodiment of the disclosure may include: obtaining a transform feature map corresponding to a transform block for a residual block of a current block, from a bitstream; generating a coding context feature map for the transform block by applying, to a first neural network, a prediction block for the current block, neighboring pixels of the current block, and coding context information; and reconstructing the current block by applying, to a second neural network, the transform feature map and the coding context feature map.

In the AI-based image decoding method according to an embodiment of the disclosure, the current block is reconstructed by generating a feature map for coding context through a neural network for generating the coding context feature map using the neighboring pixels, the prediction block, and the coding context information, obtaining the feature map for the coding context and the transform feature map for the a transform coefficient generated through a neural network, and inputting the feature map for the coding context and the transform feature map to a neural network for inverse-transform, and thus a bitrate is reduced because additional information other than the transform feature map for the transform coefficient generated through the neural network is not transmitted. In addition, the neighboring pixels, the prediction block, and the coding context are usable at a decoding side, and thus overhead transmitted to the decoding side for inverse-transform may be controlled, and results of transform and inverse-transform suitable to various features of a block to be transformed may be obtained compared to using fewer fixed transform kernels of the standard of the related art.

According to an embodiment of the disclosure, the second neural network may output a result value obtained by performing inverse-transform after inverse-quantization.

According to an embodiment of the disclosure, the reconstructing of the current block may include: obtaining the residual block by applying, to the second neural network, the transform feature map and the coding context feature map; and reconstructing the current block by using the residual block and the prediction block.

According to an embodiment of the disclosure, the reconstructed current block may further include the neighboring pixels of the current block for deblocking filtering of the current block.

An AI-based image decoding apparatus according to an embodiment of the disclosure may include: a memory storing one or more instructions; and at least one processor configured to operate according to the one or more instructions to: obtain a transform feature map corresponding to a transform block for a residual block of a current block, from a bitstream; generate a coding context feature map for the transform block by applying, to a first neural network, a prediction block for the current block, neighboring pixels of the current block, and coding context information; and reconstruct the current block by applying, to a second neural network, the transform feature map and the coding context feature map.

In the AI-based image decoding apparatus according to an embodiment of the disclosure, the current block is reconstructed by generating a feature map for coding context through a neural network for generating the coding context feature map using the neighboring pixels, the prediction block, and the coding context information, obtaining the feature map for the coding context and the transform feature map for the a transform coefficient generated through a neural network, and inputting the feature map for the coding context and the transform feature map to a neural network for inverse-transform, and thus a bitrate is reduced because additional information other than the transform feature map for the transform coefficient generated through the neural network is not transmitted. In addition, the neighboring pixels, the prediction block, and the coding context are usable at a decoding side, and thus overhead transmitted to the decoding side for inverse-transform may be controlled, and results of transform and inverse-transform suitable to various features of a block to be transformed may be obtained compared to using fewer fixed transform kernels of the standard of the related art.

According to an embodiment of the disclosure, the second neural network may output a result value obtained by performing inverse-transform after inverse-quantization.

According to an embodiment of the disclosure, the current block may be reconstructed by obtaining the residual block by applying, to the second neural network, the transform feature map and the coding context feature map, and reconstructing the current block by using the residual block and the prediction block.

According to an embodiment of the disclosure, the reconstructed current block may further include the neighboring pixels of the current block for deblocking filtering of the current block.

An AI-based image encoding method according to an embodiment of the disclosure may include: obtaining a residual block, based on a prediction block of a current block and an original block of the current block; generating a coding context feature map for a transform block by applying, to a first neural network, the prediction block, neighboring pixels of the current block, and coding context information; obtaining a transform feature map corresponding to the transform block by applying, to a second neural network, the coding context feature map and the residual block; and generating a bitstream including the transform feature map.

In the AI-based image encoding method according to an embodiment of the disclosure, the current block is reconstructed by generating a feature map for coding context through a neural network for generating the coding context feature map using the neighboring pixels, the prediction block, and the coding context information, obtaining the feature map for the coding context and the transform feature map for the a transform coefficient generated through a neural network, and inputting the feature map for the coding context and the transform feature map to a neural network for inverse-transform, and thus a bitrate is reduced because additional information other than the transform feature map for the transform coefficient generated through the neural network is not transmitted. In addition, the neighboring pixels, the prediction block, and the coding context are usable at a decoding side, and thus overhead transmitted to the decoding side for inverse-transform may be controlled, and results of transform and inverse-transform suitable to various features of a block to be transformed may be obtained compared to using fewer fixed transform kernels of the standard of the related art.

According to an embodiment of the disclosure, the second neural network may output the transform feature map for a quantized transform coefficient.

An AI-based image encoding apparatus according to an embodiment of the disclosure may include: a memory storing one or more instructions; and at least one processor configured to operate according to the one or more instructions to: obtain a residual block, based on a prediction block of a current block and an original block of the current block; generate a coding context feature map for a transform block by applying, to a first neural network, the prediction block, neighboring pixels of the current block, and coding context information; obtain a transform feature map corresponding to the transform block by applying, to a second neural network, the coding context feature map and the residual block; and generate a bitstream including the transform feature map.

In the AI-based image encoding apparatus according to an embodiment of the disclosure, the current block is reconstructed by generating a feature map for coding context through a neural network for generating the coding context feature map using the neighboring pixels, the prediction block, and the coding context information, obtaining the feature map for the coding context and the transform feature map for the a transform coefficient generated through a neural network, and inputting the feature map for the coding context and the transform feature map to a neural network for inverse-transform, and thus a bitrate is reduced because additional information other than the transform feature map for the transform coefficient generated through the neural network is not transmitted. In addition, the neighboring pixels, the prediction block, and the coding context are usable at a decoding side, and thus overhead transmitted to the decoding side for inverse-transform may be controlled, and results of transform and inverse-transform suitable to various features of a block to be transformed may be obtained compared to using fewer fixed transform kernels of the standard of the related art.

According to an embodiment of the disclosure, the second neural network may output the transform feature map for a quantized transform coefficient.

A machine-readable storage medium may be provided in the form of a non-transitory storage medium. Here, the "non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

According to an embodiment of the disclosure, a method according to various embodiments of the disclosure in the present specification may be provided by being included in a computer program product. The computer program products are products that can be traded between sellers and buyers. The computer program product may be distributed in the form of machine-readable storage medium (for example, a compact disc read-only memory (CD-ROM)), or distributed (for example, downloaded or uploaded) through an application store or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or a memory of a relay server.

## Claims

1. An artificial intelligence (AI)-based image decoding method comprising:
obtaining a transform block for a current block, from a bitstream (S1110);
obtaining a transform kernel from a neural network by inputting a prediction block for the current block, neighboring pixels of the current block, and coding context information to the neural network (S1130);
obtaining a residual block of the current block by applying the transform kernel to the transform block (S1150); and
reconstructing the current block by using the residual block and the prediction block (S1170).

2. The AI-based image decoding method of claim 1, wherein the coding context information comprises at least one of a quantization parameter of the current block, a split tree structure of the current block, a split structure of the neighboring pixels, a split type of the current block, or a split type of the neighboring pixels.

3. The AI-based image decoding method of claim 1 or 2, wherein the transform block is a block transformed by a neural network-based transform kernel or a block transformed by one linear transform kernel from among a plurality of pre-determined linear transform kernels.

4. The AI-based image decoding method of any one of claims 1 to 3, wherein the generated transform kernel comprises a left transform kernel to be applied to a left side of the transform block and a right transform kernel to be applied to a right side of the transform block.

5. An artificial intelligence (AI)-based image decoding method comprising:
obtaining a transform feature map corresponding to a transform block for a current block, from a bitstream (S1510);
generating a coding context feature map for the transform block by inputting, to a first neural network, a prediction block for the current block, neighboring pixels of the current block, and coding context information (S1530); and
reconstructing the current block based on a residual block that is obtained from a second neural network by inputting the transform feature map and the coding context feature map to the second neural network (S1550).

6. The AI-based image decoding method of claim 5, wherein the second neural network outputs a result value obtained by performing inverse-transform after inverse-quantization.

7. The AI-based image decoding method of claim 5 or 6, wherein the reconstructing of the current block comprises:
obtaining the residual block from the second neural network by inputting, to the second neural network, the transform feature map and the coding context feature map; and
reconstructing the current block by using the residual block and the prediction block.

8. The AI-based image decoding method of any one of claims 5 to 7, wherein the reconstructed current block comprises the neighboring pixels of the current block for deblocking filtering of the current block.

9. An artificial intelligence (AI)-based image encoding method comprising:
obtaining a residual block, based on a prediction block of a current block and an original block of the current block (S910);
obtaining a transform kernel from a neural network by inputting the prediction block, neighboring pixels of the current block, and coding context information to the neural network(S930);
obtaining the transform block by applying the transform kernel to the residual block (S950); and
generating a bitstream including the transform block (S970).

10. The AI-based image encoding method of claim 9, wherein the transform block is inverse-transformed by a neural network-based transform kernel or inverse-transformed by one linear transform kernel from among a plurality of pre-determined linear transform kernels, during an image decoding process.

11. The AI-based image encoding method of claim 9 or 10, wherein the generated transform kernel comprises a left transform kernel to be applied to a left side of the residual block and a right transform kernel to be applied to a right side of the residual block.

12. An artificial intelligence (AI)-based image encoding method comprising:
obtaining a residual block, based on a prediction block of a current block and an original block of the current block (S1310);
generating a coding context feature map from a first neural network by inputting the prediction block, neighboring pixels of the current block, and coding context information to the first neural network (S1330);
obtaining a transform feature map from a second neural network by inputting the coding context feature map and the residual block to the second neural network(S1350); and
generating a bitstream including the transform feature map (S1370).

13. The AI-based image encoding method of claim 12, wherein the second neural network outputs the transform feature map for a quantized transform coefficient.

14. An artificial intelligence (AI)-based image decoding apparatus (1200) comprising:
a memory storing one or more instructions; and
at least one processor configured to operate according to the one or more instructions to:
obtain a transform block for a current block, from a bitstream;
obtain a transform kernel from a neural network by inputting a prediction block for the current block, neighboring pixels of the current block, and coding context information to the neural network;
obtain a residual block of the current block by applying the generated transform kernel to the transform block; and
reconstruct the current block by using the residual block and the prediction block.

15. The AI-based image decoding apparatus of claim 14, wherein the coding context information comprises at least one of a quantization parameter of the current block, a split tree structure of the current block, a split structure of the neighboring pixels, a split type of the current block, or a split type of the neighboring pixels.
